(19) Europäisches Patentamt / European Patent Office / Office européen des brevets

(11) **EP 4 622 356 A1**

(12) **EUROPEAN PATENT APPLICATION**

(43) Date of publication:
**24.09.2025** Bulletin 2025/39

(21) Application number: **25164787.1**

(22) Date of filing: **19.03.2025**

(51) International Patent Classification (IPC):
**H04W 52/14** (2009.01)   **H04L 5/14** (2006.01)
**H04W 52/36** (2009.01)   **H04W 72/0457** (2023.01)
**H04W 72/23** (2023.01)

(52) Cooperative Patent Classification (CPC):
**H04W 52/146; H04L 5/14; H04W 52/367;
H04W 72/0457; H04W 72/23**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.03.2024 GB 202404031**

(71) Applicant: **Nokia Technologies Oy
02610 Espoo (FI)**

(72) Inventors:
• **TIIROLA, Esa Tapani
Oulu (FI)**
• **VASENKARI, Petri Juhani
Turku (FI)**

(74) Representative: **Nokia EPO representatives
Nokia Technologies Oy
Karakaari 7
02610 Espoo (FI)**

(54) **CONFIGURATION OF UPLINK SCHEDULING FREQUENCY RANGE**

(57) Example embodiments relate to configuring an uplink scheduling frequency range (SFR) for a user equipment. The user equipment may comprise: means for receiving, from a base station, a configuration of an uplink SFR, wherein the uplink SFR is associated with a reference location or a reference range in frequency domain, and wherein the uplink SFR is confined within a channel bandwidth; means for determining at least one maximum power reduction requirement based on the configuration of the uplink SFR; means for transmitting, to the base station, an uplink signal within the uplink SFR in compliance with the at least one maximum power reduction requirement; and means for switching between transmission of the uplink signal within the uplink SFR and reception of a downlink signal within the channel bandwidth, wherein the switching comprises adaptation of at least one parameter of baseband processing of the uplink signal or downlink signal.

1501
Receiving, from a base station, a configuration of an uplink scheduling frequency range, wherein the uplink scheduling frequency range is associated with a reference location or a reference range in frequency domain, and wherein the uplink scheduling frequency range is confined within a channel bandwidth

1502
Determining at least one maximum power reduction requirement based on the configuration of the uplink scheduling frequency range

1503
Transmitting, to the base station, an uplink signal within the uplink scheduling frequency range in compliance with the at least one maximum power reduction requirement

1504
Switching between transmission of the uplink signal within the uplink scheduling frequency range and reception of a downlink signal within the channel bandwidth, wherein the switching comprises adaptation of at least one parameter of baseband processing of the uplink signal or downlink signal, and wherein the adaptation of the at least one parameter is based on a bandwidth of the uplink signal and/or a bandwidth of the downlink signal

FIG. 15

EP 4 622 356 A1

**Description**

**TECHNICAL FIELD**

Various example embodiments generally relate to the field of wireless data transmission. Some example embodiments relate to configuration and use of an uplink scheduling frequency range for determining maximum power reduction requirement(s) and/or resource allocation of a user equipment (UE).

**BACKGROUND**

In wireless communications, one source of signal distortion is the non-linearity of the power amplifier applied to the signal to be transmitted. A user equipment (UE) may be therefore allowed to reduce its maximum power in some circumstances, for example depending on characteristics of the transmitted signal, such as for example waveform, the order of modulation, resource block allocation, or the power class of the UE.

**SUMMARY**

This summary is provided to introduce a selection of concepts in a simplified form that are further described below in the detailed description. This summary is not intended to identify key features or essential features of the claimed subject matter, nor is it intended to be used to limit the scope of the claimed subject matter.

Example embodiments of the present disclosure enable to optimize uplink transmission by considering both baseband and radio frequency (RF) aspects, when determining maximum power reduction (MPR) requirements and/or resource allocation for uplink transmission. This and other benefits may be achieved by the features of the independent claims. Further example embodiments are provided in the dependent claims, the description, and the drawings.

According to a first aspect, a user equipment is disclosed. The user equipment may comprise: at least one processor; and at least one memory storing instructions that, when executed by the at least one processor, cause the user equipment at least to: receive, from a base station, a configuration of an uplink scheduling frequency range, wherein the uplink scheduling frequency range is associated with a reference location or a reference range in frequency domain, and wherein the uplink scheduling frequency range is confined within a channel bandwidth; and perform at least one of: determining at least one maximum power reduction requirement based on the configuration of the uplink scheduling frequency range, or receiving a resource allocation for transmitting an uplink signal on the uplink scheduling frequency range; and transmit, to the base station, the uplink signal within the uplink scheduling frequency range in compliance with at least one of: the at least one maximum power reduction requirement, or the resource allocation on the uplink scheduling frequency range.

According to an example embodiment of the first aspect, the instructions may be configured to, when executed by the at least one processor, cause the user equipment to: determine the at least one maximum power reduction requirement further based on the resource allocation.

According to an example embodiment of the first aspect, the instructions may be configured to, when executed by the at least one processor, cause the user equipment to: receive, from the base station, a master information block, a system information block, or dedicated signalling comprising an indication of the channel bandwidth of the user equipment.

According to an example embodiment of the first aspect, the instructions may be configured to, when executed by the at least one processor, cause the user equipment to: determine at least one in band emission requirement or at least one out of band emission requirement based on the channel bandwidth of the user equipment.

According to an example embodiment of the first aspect, the channel bandwidth of the user equipment comprises an uplink channel bandwidth of the user equipment.

According to an example embodiment of the first aspect, the reference location or the reference range is substantially in the middle of the uplink scheduling frequency range or located within the uplink scheduling frequency range.

According to an example embodiment of the first aspect, the configuration of the uplink scheduling frequency range comprises an indication of the reference location or the reference range.

According to an example embodiment of the first aspect, the reference location comprises at least one of the following: a reference location of a direct current component in the frequency domain, a reference location of a direct current subcarrier in the frequency domain, a centre frequency of the uplink scheduling frequency range, a reference local oscillator frequency, or a reference centre frequency of the user equipment for uplink and downlink communication.

According to an example embodiment of the first aspect, the instructions may be configured to, when executed by the at least one processor, cause the user equipment to: select the reference location from a predefined frequency range, receive an indication of the reference location in the configuration of the uplink scheduling frequency range, or determine the reference location based on the uplink scheduling frequency range.

According to an example embodiment of the first aspect, the instructions may be configured to, when executed by the at least one processor, cause the user equipment to: select an actual local oscillator location in the frequency domain for frequency upconversion or down conversion.

According to an example embodiment of the first aspect, the actual local oscillator location is the reference location, or the actual local oscillator location is selected from a predefined range around the reference location.

According to an example embodiment of the first aspect, the instructions may be configured to, when executed by the at least one processor, cause the user equipment to: transmit an indication of the actual local oscillator location to the base station.

According to an example embodiment of the first aspect, the instructions may be configured to, when executed by the at least one processor, cause the user equipment to: receive, from the base station, a configuration of a downlink scheduling frequency range, wherein the uplink scheduling frequency range is confined within the downlink scheduling frequency range.

According to an example embodiment of the first aspect, the instructions may be configured to, when executed by the at least one processor, cause the user equipment to: switch between transmission of the uplink signal and reception of a downlink signal within the downlink scheduling frequency range without changing the actual local oscillator location.

According to an example embodiment of the first aspect, the instructions may be configured to, when executed by the at least one processor, cause the user equipment to: receive, from the base station, an update of the configuration of the uplink scheduling frequency range or an update of the configuration of the downlink scheduling frequency range, wherein the update of the configuration of the uplink scheduling frequency range or the update of the configuration of the downlink scheduling frequency range is not associated with any of a change of the reference location, a change of a duration of a guard period, or introduction of the guard period between transmission of the uplink signal and the reception of the downlink signal.

According to an example embodiment of the first aspect, the instructions may be configured to, when executed by the at least one processor, cause the user equipment to: receive, from the base station, an update of the configuration of the uplink scheduling frequency range or an update of the configuration of the downlink scheduling frequency range, wherein the update of the configuration of the uplink scheduling frequency range or the update of the configuration of the downlink scheduling frequency range is associated with a change of the reference location and one of an increase of a duration of a guard period between transmission of the uplink signal and the reception of the downlink signal or introduction of the guard period.

According to an example embodiment of the first aspect, a transmission bandwidth of the uplink signal is different from a reception bandwidth of the downlink signal.

According to an example embodiment of the first aspect, the uplink scheduling frequency range or the downlink scheduling frequency range comprises a contiguous range of physical resource blocks.

According to an example embodiment of the first aspect, physical resource blocks of the uplink scheduling frequency range are a subset of physical resource blocks of the channel bandwidth, or physical resource blocks of the downlink scheduling frequency range are a subset of physical resource blocks of the channel bandwidth, or the physical resource blocks of downlink scheduling range are identical to the physical resource blocks of the channel bandwidth, or wherein physical resource blocks of the uplink scheduling frequency range or the physical resource blocks of the downlink scheduling frequency range have been selected from configured subsets of physical resource blocks of the channel bandwidth.

According to an example embodiment of the first aspect, the instructions may be configured to, when executed by the at least one processor, cause the user equipment to: determine the at least one maximum power reduction requirement further based on the reference location or the actual local oscillator location.

According to an example embodiment of the first aspect, the at least one maximum power reduction requirement comprises a maximum power reduction, MPR, value or an additional maximum power reduction, A-MPR, value.

According to an example embodiment of the first aspect, the instructions may be configured to, when executed by the at least one processor, cause the user equipment to: transmit, to the base station, an indication of a maximum uplink scheduling frequency range or a maximum downlink scheduling frequency range of the user equipment, wherein the maximum uplink scheduling frequency range or the maximum downlink scheduling frequency range of the user equipment is narrower than the channel bandwidth.

According to a second aspect, a base station is disclosed. The base station may comprise: at least one processor; and at least one memory storing instructions that, when executed by the at least one processor, cause the user equipment at least to: transmit, to a user equipment, at least one of: a configuration of an uplink scheduling frequency range for the user equipment, wherein the uplink scheduling frequency range is associated with a reference location or a reference range in frequency domain, and wherein the uplink scheduling frequency range is confined within a channel bandwidth, or a resource allocation for transmitting an uplink signal on the uplink scheduling frequency range; and receive, from the user equipment, the uplink signal transmitted within the uplink scheduling frequency range in compliance with at least one of: the at least one maximum power reduction requirement, or the resource allocation on the uplink scheduling frequency range.

According to an example embodiment of the second aspect, the instructions may be configured to, when executed by the at least one processor, cause the base station to: receive, from the user equipment, an indication of a maximum uplink scheduling frequency range or a maximum downlink scheduling frequency range of the user equipment, wherein the maximum uplink scheduling frequency range or a maximum downlink scheduling frequency range of the user equipment is narrower than the channel bandwidth; and determine the uplink scheduling frequency range such that the uplink scheduling frequency range is within the maximum uplink scheduling frequency range of the user equipment, or determine a downlink scheduling frequency range such that the downlink scheduling frequency range is within the maximum downlink scheduling frequency range of the user equipment.

According to a third aspect, a method is disclosed. The method may comprise: receiving, from a base station, a configuration of an uplink scheduling frequency range, wherein the uplink scheduling frequency range is associated with a reference location or a reference range in frequency domain, and wherein the uplink scheduling frequency range is confined within a channel bandwidth; and performing at least one of: determining at least one maximum power reduction requirement based on the configuration of the uplink scheduling frequency range, or receiving a resource allocation for transmitting an uplink signal on the uplink scheduling frequency range; and transmitting, to the base station, the uplink signal within the uplink scheduling frequency range in compliance with at least one of: the at least one maximum power reduction requirement, or the resource allocation on the uplink scheduling frequency range. The method may be performed by a user equipment.

According to an example embodiment of the third aspect, the method comprises: determining the at least one maximum power reduction requirement further based on the resource allocation.

According to an example embodiment of the third aspect, the method comprises: receiving, from the base station, a master information block, a system information block, or dedicated signalling comprising an indication of the channel bandwidth of the user equipment.

According to an example embodiment of the third aspect, the method comprises: determining at least one in band emission requirement or at least one out of band emission requirement based on the channel bandwidth of the user equipment.

According to an example embodiment of the third aspect, the channel bandwidth of the user equipment comprises an uplink channel bandwidth of the user equipment.

According to an example embodiment of the third aspect, the reference location or the reference range is substantially in the middle of the uplink scheduling frequency range or located within the uplink scheduling frequency range.

According to an example embodiment of the third aspect, the configuration of the uplink scheduling frequency range comprises an indication of the reference location or the reference range.

According to an example embodiment of the third aspect, the reference location comprises at least one of the following: a reference location of a direct current component in the frequency domain, a reference location of a direct current subcarrier in the frequency domain, a centre frequency of the uplink scheduling frequency range, a reference local oscillator frequency, or a reference centre frequency of the user equipment for uplink and downlink communication.

According to an example embodiment of the third aspect, the method comprises: selecting the reference location from a predefined frequency range, receiving an indication of the reference location in the configuration of the uplink scheduling frequency range, or determining the reference location based on the uplink scheduling frequency range.

According to an example embodiment of the third aspect, the method comprises: selecting an actual local oscillator location in the frequency domain for frequency upconversion or down conversion.

According to an example embodiment of the third aspect, the actual local oscillator location is the reference location, or the actual local oscillator location is selected from a predefined range around the reference location.

According to an example embodiment of the third aspect, the method comprises: transmitting an indication of the actual local oscillator location to the base station.

According to an example embodiment of the third aspect, the method comprises: receiving, from the base station, a configuration of a downlink scheduling frequency range, wherein the uplink scheduling frequency range is confined within the downlink scheduling frequency range.

According to an example embodiment of the third aspect, the method comprises: switching between transmission of the uplink signal and reception of a downlink signal within the downlink scheduling frequency range without changing the actual local oscillator location.

According to an example embodiment of the third aspect, the method comprises: receiving, from the base station, an update of the configuration of the uplink scheduling frequency range or an update of the configuration of the downlink scheduling frequency range, wherein the update of the configuration of the uplink scheduling frequency range or the update of the configuration of the downlink scheduling frequency range is not associated with any of a change of the reference location, a change of a duration of a guard period, or introduction of the guard period between transmission of the uplink signal and the reception of the downlink signal.

According to an example embodiment of the third aspect, the method comprises: receiving, from the base station, an update of the configuration of the uplink scheduling frequency range or an update of the configuration of the downlink scheduling frequency range, wherein the update of the configuration of the uplink scheduling frequency range or the update of the configuration of the downlink scheduling frequency range is associated with a change of the reference location and one of an increase of a duration of a guard period between transmission of the uplink signal and the reception of the downlink signal or introduction of the guard period.

According to an example embodiment of the third aspect, a transmission bandwidth of the uplink signal is different from a reception bandwidth of the downlink signal.

According to an example embodiment of the third aspect, the uplink scheduling frequency range or the downlink scheduling frequency range comprises a contiguous range of physical resource blocks.

According to an example embodiment of the third aspect, physical resource blocks of the uplink scheduling frequency range are a subset of physical resource blocks of the channel bandwidth, or physical resource blocks of the downlink scheduling frequency range are a subset of physical resource blocks of the channel bandwidth, or the physical resource blocks of downlink scheduling range are identical to the physical resource blocks of the channel bandwidth, or wherein physical resource blocks of the uplink scheduling frequency range or the physical resource blocks of the downlink scheduling frequency range have been selected from configured subsets of physical resource blocks of the channel bandwidth.

According to an example embodiment of the third aspect, the method comprises: determining the at least one maximum power reduction requirement further based on the reference location or the actual local oscillator location.

According to an example embodiment of the third aspect, the at least one maximum power reduction requirement comprises a maximum power reduction, MPR, value or an additional maximum power reduction, A-MPR, value.

According to an example embodiment of the third aspect, the method comprises: transmitting, to the base station, an indication of a maximum uplink scheduling frequency range or a maximum downlink scheduling frequency range of the user equipment, wherein the maximum uplink scheduling frequency range or the maximum downlink scheduling frequency range of the user equipment is narrower than the channel bandwidth.

According to a fourth aspect, a method is disclosed. The method may comprise: transmitting, to a user equipment, at least one of: a configuration of an uplink scheduling frequency range for the user equipment, wherein the uplink scheduling frequency range is associated with a reference location or a reference range in frequency domain, and wherein the uplink scheduling frequency range is confined within a channel bandwidth, or a resource allocation for transmitting an uplink signal on the uplink scheduling frequency range; and receiving, from the user equipment, the uplink signal transmitted within the uplink scheduling frequency range in compliance with at least one of: the at least one maximum power reduction requirement, or the resource allocation on the uplink scheduling frequency range. The method may be performed by a base station.

According to an example embodiment of the fourth aspect, the method comprises: receiving, from the user equipment, an indication of a maximum uplink scheduling frequency range or a maximum downlink scheduling frequency range of the user equipment, wherein the maximum uplink scheduling frequency range or a maximum downlink scheduling frequency range of the user equipment is narrower than the channel bandwidth; and determining the uplink scheduling frequency range such that the uplink scheduling frequency range is within the maximum uplink scheduling frequency range of the user equipment, or determining a downlink scheduling frequency range such that the downlink scheduling frequency range is within the maximum downlink scheduling frequency range of the user equipment.

According to a fifth aspect, a user equipment is disclosed. The user equipment may comprise: at least one processor; and at least one memory storing instructions that, when executed by the at least one processor, cause the user equipment at least to: receive, from a base station, a configuration of an uplink scheduling frequency range, wherein the uplink scheduling frequency range is associated with a reference location or a reference range in frequency domain, and wherein the uplink scheduling frequency range is confined within a channel bandwidth; determine at least one maximum power reduction requirement based on the configuration of the uplink scheduling frequency range; and transmit, to the base station, an uplink signal within the uplink scheduling frequency range in compliance with the at least one maximum power reduction requirement.

According to an example embodiment of the fifth aspect, the instructions may be configured to, when executed by the at least one processor, cause the user equipment to:

According to an example embodiment of the fifth aspect, the instructions may be configured to, when executed by the at least one processor, cause the user equipment to: receive, from the base station, a configuration of a downlink scheduling frequency range, wherein the uplink scheduling frequency range is confined within the downlink scheduling frequency range.

According to an example embodiment of the fifth aspect, the instructions may be configured to, when executed by the at least one processor, cause the user equipment to: receive a resource allocation for transmitting the uplink signal on the uplink scheduling frequency range; determine the at least one maximum power reduction requirement further based on the resource allocation.

According to an example embodiment of the fifth aspect, the instructions may be configured to, when executed by the at least one processor, cause the user equipment to: receive, from the base station, a master information block, a system information block, or dedicated signalling comprising an indication of the channel bandwidth of the user equipment.

According to an example embodiment of the fifth aspect, the instructions may be configured to, when executed by the at least one processor, cause the user equipment to: determine at least one in band emission requirement or at least one out of band emission requirement based on the channel bandwidth of the user equipment.

According to an example embodiment of the fifth aspect, the channel bandwidth of the user equipment comprises an uplink channel bandwidth of the user equipment and a downlink channel bandwidth of the user equipment, and wherein the uplink channel bandwidth is equal to the downlink channel bandwidth.

According to an example embodiment of the fifth aspect, the reference location or the reference range is substantially in the middle of the uplink scheduling frequency range or located within the uplink scheduling frequency range.

According to an example embodiment of the fifth aspect, the configuration of the uplink scheduling frequency range and/or the downlink scheduling frequency range comprises an indication of the reference location or the reference range.

According to an example embodiment of the fifth aspect, the reference location comprises at least one of the following: a reference location of a direct current component in the frequency domain, a reference location of a direct current subcarrier in the frequency domain, a centre frequency of the uplink scheduling frequency range, a reference local oscillator frequency, or a reference centre frequency of the user equipment for uplink and downlink communication.

According to an example embodiment of the fifth aspect, the instructions may be configured to, when executed by the at least one processor, cause the user equipment to: select the reference location from a predefined frequency range, receive an indication of the reference location in the configuration of the uplink scheduling frequency range, determine the reference location based on the uplink scheduling frequency range.

According to an example embodiment of the fifth aspect, the instructions may be configured to, when executed by the at least one processor, cause the user equipment to: selecting an actual local oscillator location in the frequency domain for frequency upconversion and down conversion.

According to an example embodiment of the fifth aspect, the actual local oscillator location is the reference location, or the actual local oscillator location is selected from a predefined range of physical resource blocks around the reference location.

According to an example embodiment of the fifth aspect, the instructions may be configured to, when executed by the at least one processor, cause the user equipment to: transmit an indication of the actual local oscillator location to the base station.

According to an example embodiment of the fifth aspect, the instructions may be configured to, when executed by the at least one processor, cause the user equipment to: switch between transmission of the uplink signal and reception of a downlink signal within the downlink scheduling frequency range without changing the actual local oscillator location.

According to an example embodiment of the fifth aspect, the instructions may be configured to, when executed by the at least one processor, cause the user equipment to: receive, from the base station, an update of the configuration of the uplink scheduling frequency range and/or the downlink scheduling frequency range, wherein the update of the configuration of the uplink scheduling frequency range and the downlink scheduling frequency range is not associated with any of a change of the reference location, a change of a duration of a guard period between transmission of the uplink signal and the reception of the downlink signal, or introduction of the guard period.

According to an example embodiment of the fifth aspect, the instructions may be configured to, when executed by the at least one processor, cause the user equipment to: receive, from the base station, an update of the configuration of the uplink scheduling frequency range and/or the downlink scheduling frequency range, wherein the update of the configuration of the uplink scheduling frequency range and the downlink scheduling frequency range is associated with a change of the reference location and one of an increase of a duration of a guard period between transmission of the uplink signal and the reception of the downlink signal or introduction of the guard period.

According to an example embodiment of the fifth aspect, a transmission bandwidth of the uplink signal is different from a reception bandwidth of the downlink signal.

According to an example embodiment of the fifth aspect, the uplink scheduling frequency range or the downlink scheduling frequency range comprises a contiguous range of physical resource blocks.

According to an example embodiment of the fifth aspect, physical resource blocks of the uplink scheduling frequency range are a subset of physical resource blocks of the channel bandwidth, or physical resource blocks of the downlink scheduling frequency range are a subset of physical resource blocks of the channel bandwidth, or wherein the physical resource blocks of downlink scheduling range are identical to the physical resource blocks of the channel bandwidth, or wherein physical resource blocks of the uplink scheduling frequency range or the physical resource blocks of the downlink scheduling frequency range have been selected from configured subsets of physical resource blocks of the channel bandwidth.

According to an example embodiment of the fifth aspect, the instructions may be configured to, when executed by the at least one processor, cause the user equipment to: determine the at least one maximum power reduction requirement further based on the reference location or the actual local oscillator location.

According to an example embodiment of the fifth aspect, the at least one maximum power reduction requirement comprises a maximum power reduction, MPR, value or an additional maximum power reduction, A-MPR, value.

According to an example embodiment of the fifth aspect, the instructions may be configured to, when executed by the at least one processor, cause the user equipment to: transmit, to the base station, an indication of a maximum uplink scheduling frequency range or a maximum downlink scheduling frequency range of the user equipment, wherein the a maximum uplink scheduling frequency range or a maximum downlink scheduling frequency range of the user equipment is narrower than the channel bandwidth.

According to a sixth aspect, a base station is disclosed. The base station may comprise: at least one processor; and at least one memory storing instructions that, when executed by the at least one processor, cause the user equipment at least to: transmit, to a user equipment, a configuration of an uplink scheduling frequency range for the user equipment, wherein the uplink scheduling frequency range is associated with a reference location or a reference range in frequency domain, and wherein the uplink scheduling frequency range is confined within a channel bandwidth; and receive, from the user equipment, a signal transmitted within the uplink scheduling frequency range in compliance with the at least one maximum power reduction requirement.

According to an example embodiment of the sixth aspect, the instructions may be configured to, when executed by the at least one processor, cause the base station to: receive, from the user equipment, an indication of a maximum uplink scheduling frequency range or a maximum downlink scheduling frequency range of the user equipment, wherein the maximum uplink scheduling frequency range or a maximum downlink scheduling frequency range of the user equipment is narrower than the channel bandwidth; determining the uplink scheduling frequency range such that the uplink scheduling frequency range is within the maximum uplink scheduling frequency range of the user equipment; or determine a downlink scheduling frequency range such that the downlink scheduling frequency range is within the maximum downlink scheduling frequency range of the user equipment.

According to a seventh aspect, a method is disclosed. The method may comprise: receiving, from a base station, a configuration of an uplink scheduling frequency range, wherein the uplink scheduling frequency range is associated with a reference location or a reference range in frequency domain, and wherein the uplink scheduling frequency range is confined within a channel bandwidth; determining at least one maximum power reduction requirement based on the configuration of the uplink scheduling frequency range; and transmitting, to the base station, an uplink signal within the uplink scheduling frequency range in compliance with the at least one maximum power reduction requirement. The method may be performed by a user equipment.

According to an example embodiment of the seventh aspect, the method may comprise: receiving, from the base station, a configuration of a downlink scheduling frequency range, wherein the uplink scheduling frequency range is confined within the downlink scheduling frequency range.

According to an example embodiment of the seventh aspect, the method may comprise: receiving a resource allocation for transmitting the uplink signal on the uplink scheduling frequency range; and determining the at least one maximum power reduction requirement further based on the resource allocation.

According to an example embodiment of the seventh aspect, the method may comprise: receiving, from the base station, a master information block, a system information block, or dedicated signalling comprising an indication of the channel bandwidth of the user equipment.

According to an example embodiment of the seventh aspect, the method may comprise: determining at least one in band emission requirement or at least one out of band emission requirement based on the channel bandwidth of the user equipment.

According to an example embodiment of the seventh aspect, the channel bandwidth of the user equipment comprises an uplink channel bandwidth of the user equipment and a downlink channel bandwidth of the user equipment, and wherein the uplink channel bandwidth is equal to the downlink channel bandwidth.

According to an example embodiment of the seventh aspect, the reference location or the reference range is substantially in the middle of the uplink scheduling frequency range or located within the uplink scheduling frequency range.

According to an example embodiment of the seventh aspect, the configuration of the uplink scheduling frequency range and/or the downlink scheduling frequency range comprises an indication of the reference location or the reference range.

According to an example embodiment of the seventh aspect, the reference location comprises at least one of the following: a reference location of a direct current component in the frequency domain, a reference location of a direct current subcarrier in the frequency domain, a centre frequency of the uplink scheduling frequency range, a reference local oscillator frequency, or a reference centre frequency of the user equipment for uplink and downlink communication.

According to an example embodiment of the seventh aspect, the method may comprise: selecting the reference location from a predefined frequency range, receiving an indication of the reference location in the configuration of the uplink scheduling frequency range, or determining the reference location based on the uplink scheduling frequency range.

According to an example embodiment of the seventh aspect, the method may comprise: selecting an actual local oscillator location in the frequency domain for frequency upconversion and down conversion.

According to an example embodiment of the seventh aspect, the actual local oscillator location is the reference location, or the actual local oscillator location is selected from a predefined range of physical resource blocks around the reference location.

According to an example embodiment of the seventh aspect, the method may comprise: transmitting an indication of the actual local oscillator location to the base station.

According to an example embodiment of the seventh aspect, the method may comprise: switching between transmission of the uplink signal and reception of a downlink signal within the downlink scheduling frequency range without changing the actual local oscillator location.

According to an example embodiment of the seventh aspect, the method may comprise: receiving, from the base station, an update of the configuration of the uplink scheduling frequency range and/or the downlink scheduling frequency range, wherein the update of the configuration of the uplink scheduling frequency range and the downlink scheduling frequency range is not associated with any of a change of the reference location, a change of a duration of a guard period between transmission of the uplink signal and the reception of the downlink signal, or introduction of the guard period.

According to an example embodiment of the seventh aspect, the method may comprise: receiving, from the base station, an update of the configuration of the uplink scheduling frequency range and/or the downlink scheduling frequency range, wherein the update of the configuration of the uplink scheduling frequency range and the downlink scheduling frequency range is associated with a change of the reference location and one of an increase of a duration of a guard period between transmission of the uplink signal and the reception of the downlink signal or introduction of the guard period.

According to an example embodiment of the seventh aspect, a transmission bandwidth of the uplink signal is different from a reception bandwidth of the downlink signal.

According to an example embodiment of the seventh aspect, the uplink scheduling frequency range or the downlink scheduling frequency range comprises a contiguous range of physical resource blocks.

According to an example embodiment of the seventh aspect, physical resource blocks of the uplink scheduling frequency range are a subset of physical resource blocks of the channel bandwidth, or physical resource blocks of the downlink scheduling frequency range are a subset of physical resource blocks of the channel bandwidth, or wherein the physical resource blocks of downlink scheduling range are identical to the physical resource blocks of the channel bandwidth, or wherein physical resource blocks of the uplink scheduling frequency range or the physical resource blocks of the downlink scheduling frequency range have been selected from configured subsets of physical resource blocks of the channel bandwidth.

According to an example embodiment of the seventh aspect, the method may comprise: determining the at least one maximum power reduction requirement further based on the reference location or the actual local oscillator location.

According to an example embodiment of the fifth aspect, the at least one maximum power reduction requirement comprises a maximum power reduction, MPR, value or an additional maximum power reduction, A-MPR, value.

According to an example embodiment of the seventh aspect, the method may comprise: transmitting, to the base station, an indication of a maximum uplink scheduling frequency range or a maximum downlink scheduling frequency range of the user equipment, wherein the maximum uplink scheduling frequency range or the maximum downlink scheduling frequency range of the user equipment is narrower than the channel bandwidth.

According to an eighth aspect, a method is disclosed. The method may comprise: transmitting, to a user equipment, a configuration of an uplink scheduling frequency range for the user equipment, wherein the uplink scheduling frequency range is associated with a reference location or a reference range in frequency domain, and wherein the uplink scheduling frequency range is confined within a channel bandwidth; and receiving, from the user equipment, a signal transmitted within the uplink scheduling frequency range in compliance with the at least one maximum power reduction requirement. The method may be performed by a base station.

According to an example embodiment of the eighth aspect, the method comprises: receiving, from the user equipment, an indication of a maximum uplink scheduling frequency range or a maximum downlink scheduling frequency range of the user equipment, wherein the maximum uplink scheduling frequency range or a maximum downlink scheduling frequency range of the user equipment is narrower than the channel bandwidth; and determining the uplink scheduling frequency range such that the uplink scheduling frequency range is within the maximum uplink scheduling frequency range of the user equipment, or determining a downlink scheduling frequency range such that the downlink scheduling frequency range is within the maximum downlink scheduling frequency range of the user equipment.

According to a ninth aspect, a user equipment is disclosed. The user equipment may comprise: at least one processor; and at least one memory storing instructions that, when executed by the at least one processor, cause the user equipment at least to: receive, from a base station, a configuration of an uplink scheduling frequency range, wherein the uplink scheduling frequency range is associated with a reference location or a reference range in frequency domain, and wherein the uplink scheduling frequency range is confined within a channel bandwidth; determine at least one maximum power reduction requirement based on the configuration of the uplink scheduling frequency range; transmit, to the base station, an uplink signal within the uplink scheduling frequency range in compliance with the at least one maximum power reduction requirement; and perform a switch between transmission of the uplink signal within the uplink scheduling frequency range and reception of a downlink signal within the channel bandwidth, wherein the switch comprises adaptation of at least one parameter of baseband processing of the uplink signal or downlink signal, and wherein the adaptation of the at least one parameter is based on a bandwidth of the uplink signal and/or a bandwidth of the downlink signal.

According to an example embodiment of the ninth aspect, the bandwidth of the uplink signal comprises a maximum bandwidth of the uplink signal.

According to an example embodiment of the ninth aspect, the instructions may be configured to, when executed by the at least one processor, cause the user equipment to: receive a resource allocation for transmitting the uplink signal on the uplink scheduling frequency range; and determine the at least one maximum power reduction requirement further based on the resource allocation.

According to an example embodiment of the ninth aspect, the instructions may be configured to, when executed by the at least one processor, cause the user equipment to: transmit the uplink signal within the uplink scheduling frequency range and receive the downlink signal within the channel bandwidth or a downlink scheduling frequency range with same local oscillator frequency.

According to an example embodiment of the ninth aspect, the at least one parameter of the baseband processing of the uplink signal or the downlink signal comprises sampling rate of a digital-to-analog converter or an analog-to-digital converter.

According to an example embodiment of the ninth aspect, the digital-to-analog converter is configured for the transmission of the uplink signal, the analog-to-digital converter is configured for the reception of the downlink signal, the bandwidth of the uplink signal is narrower than the bandwidth of the downlink signal, and the sampling rate of the digital-to-analog converter is lower than the sampling rate of the analog-to-digital converter.

According to an example embodiment of the ninth aspect, the at least one parameter of the baseband processing of the uplink signal or the downlink signal comprises at least one parameter of a channelization filter of the user equipment, and the adaptation of the at least one parameter of the channelization filter is configured to change width of a transition band of the channelization filter.

According to an example embodiment of the ninth aspect, the channelization filter comprises a digital filter, and the transition band of the channelization filter is wider for processing the uplink signal than for processing the downlink signal.

According to an example embodiment of the ninth aspect, the bandwidth of the uplink signal is narrower than the bandwidth of the downlink signal, and the transition band of the channelization filter is wider for processing the uplink signal than for processing the downlink signal.

According to an example embodiment of the ninth aspect, the instructions may be configured to, when executed by the at least one processor, cause the user equipment to: receive, from the base station, a master information block or a system information block comprising an indication of the channel bandwidth of the user equipment.

According to an example embodiment of the ninth aspect, the instructions may be configured to, when executed by the at least one processor, cause the user equipment to: determine at least one in band emission requirement or at least one out of band emission requirement based on the channel bandwidth of the user equipment.

According to an example embodiment of the ninth aspect, the reference location or the reference range is substantially in the middle of the uplink scheduling frequency range or located within the uplink scheduling frequency range.

According to an example embodiment of the ninth aspect, the configuration of the uplink scheduling frequency range comprises an indication of the reference location or the reference range.

According to an example embodiment of the ninth aspect, the reference location comprises at least one of the following: a reference location of a direct current component in the frequency domain, a reference location of a direct current subcarrier in the frequency domain, a centre frequency of the uplink scheduling frequency range, a reference local oscillator frequency, or a reference centre frequency of the user equipment for uplink and downlink communication.

According to an example embodiment of the ninth aspect, the instructions may be configured to, when executed by the at least one processor, cause the user equipment to: select an actual local oscillator location in the frequency domain for frequency upconversion of the uplink signal and frequency down conversion of the downlink signal.

According to an example embodiment of the ninth aspect, the actual local oscillator location is the reference location, or the actual local oscillator location is selected from a predefined range around the reference location.

According to an example embodiment of the ninth aspect, the instructions may be configured to, when executed by the at least one processor, cause the user equipment to: transmit an indication of the actual local oscillator location to the base station.

According to an example embodiment of the ninth aspect, the instructions may be configured to, when executed by the at least one processor, cause the user equipment to: receive, from the base station, a configuration of a downlink scheduling frequency range, wherein the uplink scheduling frequency range is confined within the downlink scheduling frequency range.

According to an example embodiment of the ninth aspect, the instructions may be configured to, when executed by the at least one processor, cause the user equipment to: receive, from the base station, an update of the configuration of the uplink scheduling frequency range or an update of the configuration of the downlink scheduling frequency range, wherein the update of the configuration of the uplink scheduling frequency range or the update of the configuration of the downlink scheduling frequency range is not associated with any of a change of the reference location, a change of a duration of a guard period between the transmission of the uplink signal and the reception of the downlink signal, or introduction of the guard period.

According to an example embodiment of the ninth aspect, the instructions may be configured to, when executed by the at least one processor, cause the user equipment to: receive, from the base station, an update of the configuration of the uplink scheduling frequency range or an update of the configuration of the downlink scheduling frequency range, wherein the update of the configuration of the uplink scheduling frequency range or the update of the configuration of the downlink scheduling frequency range is associated with a change of the reference location and one of an increase of a duration of a guard period between the transmission of the uplink signal and the reception of the downlink signal or introduction of the guard period.

According to an example embodiment of the ninth aspect, the uplink scheduling frequency range or the downlink scheduling frequency range comprises a contiguous range of physical resource blocks.

According to an example embodiment of the ninth aspect, physical resource blocks of the uplink scheduling frequency range are a subset of physical resource blocks of the channel bandwidth, or physical resource blocks of the downlink scheduling frequency range are a subset of physical resource blocks of the channel bandwidth, or the physical resource blocks of downlink scheduling range are identical to the physical resource blocks of the channel bandwidth, or the physical resource blocks of the uplink scheduling frequency range or the physical resource blocks of the downlink scheduling frequency range have been selected from configured subsets of physical resource blocks of the channel bandwidth.

According to an example embodiment of the ninth aspect, the instructions may be configured to, when executed by the at least one processor, cause the user equipment to: determine the at least one maximum power reduction requirement further based on the reference location or the actual local oscillator location.

According to an example embodiment of the ninth aspect, the at least one maximum power reduction requirement comprises a maximum power reduction, MPR, value or an additional maximum power reduction, A-MPR, value.

According to an example embodiment of the ninth aspect, the instructions may be configured to, when executed by the at least one processor, cause the user equipment to: transmit, to the base station, an indication of a maximum uplink scheduling frequency range or a maximum downlink scheduling frequency range of the user equipment, wherein the a maximum uplink scheduling frequency range or a maximum downlink scheduling frequency range of the user equipment is narrower than the channel bandwidth

According to a tenth aspect, a method is disclosed. The method may comprise: receiving, from a base station, a configuration of an uplink scheduling frequency range, wherein the uplink scheduling frequency range is associated with a reference location or a reference range in frequency domain, and wherein the uplink scheduling frequency range is confined within a channel bandwidth; determining at least one maximum power reduction requirement based on the configuration of the uplink scheduling frequency range; transmitting, to the base station, an uplink signal within the uplink scheduling frequency range in compliance with the at least one maximum power reduction requirement; and switching between transmission of the uplink signal within the uplink scheduling frequency range and reception of a downlink signal within the channel bandwidth, wherein the switching comprises adaptation of at least one parameter of baseband processing of the uplink signal or downlink signal, and wherein the adaptation of the at least one parameter is based on a bandwidth of the uplink signal and/or a bandwidth of the downlink signal. The method may be performed by a user equipment.

According to an example embodiment of the tenth aspect, the bandwidth of the uplink signal comprises a maximum bandwidth of the uplink signal.

According to an example embodiment of the tenth aspect, the method comprises: receiving a resource allocation for transmitting the uplink signal on the uplink scheduling frequency range; and determining the at least one maximum power reduction requirement further based on the resource allocation.

According to an example embodiment of the tenth aspect, the method comprises: transmitting the uplink signal within the uplink scheduling frequency range and receiving the downlink signal within the channel bandwidth or a downlink scheduling frequency range with same local oscillator frequency.

According to an example embodiment of the tenth aspect, the at least one parameter of the baseband processing of the uplink signal or the downlink signal comprises sampling rate of a digital-to-analog converter or an analog-to-digital converter.

According to an example embodiment of the tenth aspect, the digital-to-analog converter is configured for the transmission of the uplink signal, the analog-to-digital converter is configured for the reception of the downlink signal, the bandwidth of the uplink signal is narrower than the bandwidth of the downlink signal, and the sampling rate of the digital-to-analog converter is lower than the sampling rate of the analog-to-digital converter.

According to an example embodiment of the tenth aspect, the at least one parameter of the baseband processing of the uplink signal or the downlink signal comprises at least one parameter of a channelization filter of the user equipment, and the adaptation of the at least one parameter of the channelization filter is configured to change width of a transition band of the channelization filter.

According to an example embodiment of the tenth aspect, the channelization filter comprises a digital filter, and the transition band of the channelization filter is wider for processing the uplink signal than for processing the downlink signal.

According to an example embodiment of the tenth aspect, the bandwidth of the uplink signal is narrower than the bandwidth of the downlink signal, and the transition band of the channelization filter is wider for processing the uplink signal than for processing the downlink signal.

According to an example embodiment of the tenth aspect, the method comprises: receiving, from the base station, a master information block or a system information block comprising an indication of the channel bandwidth of the user equipment.

According to an example embodiment of the tenth aspect, the method comprises: determining at least one in band emission requirement or at least one out of band emission requirement based on the channel bandwidth of the user equipment.

According to an example embodiment of the tenth aspect, the reference location or the reference range is substantially in the middle of the uplink scheduling frequency range or located within the uplink scheduling frequency range.

According to an example embodiment of the tenth aspect, the configuration of the uplink scheduling frequency range comprises an indication of the reference location or the reference range.

According to an example embodiment of the tenth aspect, the reference location comprises at least one of the following: a reference location of a direct current component in the frequency domain, a reference location of a direct current subcarrier in the frequency domain, a centre frequency of the uplink scheduling frequency range, a reference local oscillator frequency, or a reference centre frequency of the user equipment for uplink and downlink communication.

According to an example embodiment of the tenth aspect, the method comprises: selecting an actual local oscillator location in the frequency domain for frequency upconversion of the uplink signal and frequency down conversion of the downlink signal.

According to an example embodiment of the tenth aspect, the actual local oscillator location is the reference location, or the actual local oscillator location is selected from a predefined range around the reference location.

According to an example embodiment of the tenth aspect, the method comprises: transmitting an indication of the actual local oscillator location to the base station.

According to an example embodiment of the tenth aspect, the method comprises: receiving, from the base station, a configuration of a downlink scheduling frequency range, wherein the uplink scheduling frequency range is confined within the downlink scheduling frequency range.

According to an example embodiment of the tenth aspect, the method comprises: receiving, from the base station, an update of the configuration of the uplink scheduling frequency range or an update of the configuration of the downlink scheduling frequency range, wherein the update of the configuration of the uplink scheduling frequency range or the update of the configuration of the downlink scheduling frequency range is not associated with any of a change of the reference location, a change of a duration of a guard period between the transmission of the uplink signal and the reception of the downlink signal, or introduction of the guard period.

According to an example embodiment of the tenth aspect, the method comprises: receiving, from the base station, an update of the configuration of the uplink scheduling frequency range or an update of the configuration of the downlink scheduling frequency range, wherein the update of the configuration of the uplink scheduling frequency range or the update of the configuration of the downlink scheduling frequency range is associated with a change of the reference location and one of an increase of a duration of a guard period between the transmission of the uplink signal and the reception of the downlink signal or introduction of the guard period.

According to an example embodiment of the tenth aspect, the uplink scheduling frequency range or the downlink scheduling frequency range comprises a contiguous range of physical resource blocks.

According to an example embodiment of the tenth aspect, physical resource blocks of the uplink scheduling frequency range are a subset of physical resource blocks of the channel bandwidth, or physical resource blocks of the downlink scheduling frequency range are a subset of physical resource blocks of the channel bandwidth, or the physical resource blocks of downlink scheduling range are identical to the physical resource blocks of the channel bandwidth, or the physical resource blocks of the uplink scheduling frequency range or the physical resource blocks of the downlink scheduling frequency range have been selected from configured subsets of physical resource blocks of the channel bandwidth.

According to an example embodiment of the tenth aspect, the method comprises: determining the at least one maximum power reduction requirement further based on the reference location or the actual local oscillator location.

According to an example embodiment of the tenth aspect, the at least one maximum power reduction requirement comprises a maximum power reduction, MPR, value or an additional maximum power reduction, A-MPR, value.

According to an example embodiment of the tenth aspect, the method comprises: transmitting, to the base station, an indication of a maximum uplink scheduling frequency range or a maximum downlink scheduling frequency range of the user equipment, wherein the maximum uplink scheduling frequency range or the maximum downlink scheduling frequency range of the user equipment is narrower than the channel bandwidth.

According to an eleventh aspect, an apparatus is disclosed. The apparatus may comprise means for performing the method according to the third, fourth, seventh, eighth, or tenth aspect, or any example embodiment(s) thereof.

According to a twelfth aspect, a computer program, a computer program product, or a (non-transitory) computer-readable medium is disclosed. The computer program, computer program product, or (non-transitory) computer-readable medium may comprise instructions, which when executed by an apparatus (e.g., a user equipment or a base station), cause the apparatus at least to perform the method according to the third, fourth, seventh, eighth, or tenth aspect, or any example embodiment(s) thereof.

Example embodiments of the present disclosure can thus provide apparatuses, methods, computer programs, computer program products, or computer readable media for improving various aspects of wireless tethering. Any example embodiment may be combined with one or more other example embodiments. These and other aspects of the present disclosure will be apparent from the example embodiment(s) described below. According to some aspects, there is provided the subject matter of the independent claims. Some further aspects are defined in the dependent claims.

## DESCRIPTION OF THE DRAWINGS

The accompanying drawings, which are included to provide a further understanding of the example embodiments and constitute a part of this specification, illustrate example embodiments and, together with the description, help to explain the example embodiments. In the drawings:

FIG. 1 illustrates an example of a communication network;
FIG. 2 illustrates an example of an apparatus configured to practice one or more example embodiments;
FIG. 3 illustrates an example of a physical resource block (PRB);
FIG. 4 illustrates an example of maximum power reduction values configured for different types of modulations and resource block allocations;
FIG. 5 illustrates an example of a conceptual architecture of a transceiver;
FIG. 6 illustrates an example of signalling and operations for configuring an uplink/downlink scheduling frequency range;
FIG. 7 illustrates an example of a configuration of uplink and downlink scheduling frequency ranges with a reference location in the middle of the uplink scheduling frequency range;
FIG. 8 illustrates an example of a configuration of an uplink and downlink scheduling frequency range such that transmission on allocated frequency resources does not cause interference to a protected frequency band;
FIG. 9 illustrates an example of a transmission on allocated frequency resources causing interference to a protected frequency range;
FIG. 10 illustrates examples of transition bands of a channelization filter;
FIG. 11 illustrates an example of a first method for configuration of an uplink scheduling frequency range;
FIG. 12 illustrates an example of a second method for configuration of an uplink scheduling frequency range;
FIG. 13 illustrates an example of a third method for configuration of an uplink scheduling frequency range;
FIG. 14 illustrates an example of a fourth method for configuration of an uplink scheduling frequency range; and
FIG. 15 illustrates an example of a method for baseband parameter adaptation associated with transmission on an uplink scheduling frequency range.

Like references are used to designate like parts in the accompanying drawings.

## DETAILED DESCRIPTION

Reference will now be made in detail to example embodiments, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

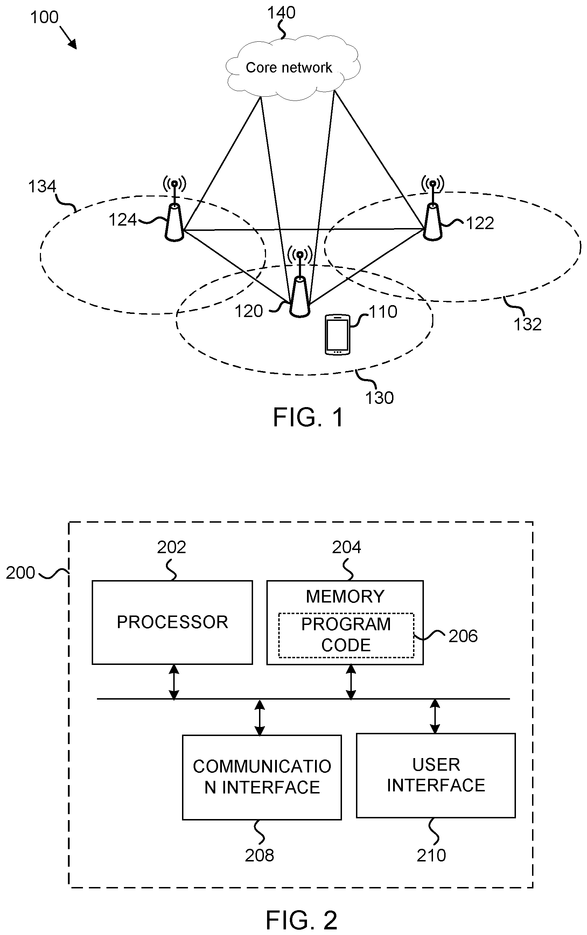

FIG. 1 illustrates an example of a communication network. Communication network 100 may comprise one or more base stations (BS) 120, 122, 124. Base station(s) 120, 122, 124 may be part of a radio access network (RAN) configured to enable a device such as UE 110, to access communication services provided by core network 140. In connection with communication network 100, base station(s) 120, 122, 124 and core network 140 may be collectively referred to as 'network'. UE 110 may be also referred to as a user device, a terminal apparatus, a terminal device, a mobile device, or the like. UE 110 may be configured to communicate with base station(s) 120, 122, 124 over a radio interface, which may be also referred to as an air interface. Base stations 120, 122, 124 may be also referred to as access nodes, access points, or network devices. A terminal device may comprise a device to which a connection from a communication network is terminated.

The radio interface may be configured for example based on the 5G NR (New Radio) standard defined by the 3rd Generation Partnership Project (3GPP), or any future standard or technology (e.g., 6G). Base stations 120, 122, 124 may for example comprise 5th generation base stations (gNB). Transmission by a base station to UE 110 may be called downlink (DL) transmission. Transmission by UE 110 to a base station may be called uplink (UL) transmission. UE 110 may be therefore configured to operate as a transmitter for uplink transmissions and as a receiver for downlink transmissions. Base station(s) 120, 122, 124 may be configured to operate as a receiver for uplink transmissions and as a transmitter for downlink transmissions. A transceiver, e.g., UE 110 or base station 120, may comprise both transmitter(s) and receiver(s).

Communication network 100 may comprise a wireless communication network or a mobile communication network, such as for example a cellular communication network. UE 110 may be configured to communicate with base station(s) 120, 122, 124 using one or more logical channels and/or physical channels, for example a control channel such as the physical downlink control channel (PDCCH) or data channels such as the physical downlink shared channel (PDSCH) or the physical uplink shared channel (PUSCH). Shared data channels, e.g., PDSCH and PUSCH, may be shared by multiple UEs.

Core network 140 may be implemented with various network functions (NF), including, for example, one or more user plane functions (UPF) and one or more access and mobility management functions (AMF). A UPF may be configured to handle user data part of a communication session. A UPF may thus provide an interconnect point between the radio access network and a data network configured to provide application services to UE 110 via core network 140 and the radio access network. For example, a UPF may be configured to handle encapsulation and decapsulation of user plane protocol(s), such as the GPRS (general packet radio service) tunnelling protocol for the user plane (GTP-U). An AMF may be configured to receive connection and session request related data from UE 110 (via a base station). An AMF may be configured to control connection and mobility management in communication network 100.

A base station 120, 122, 124 may be configured to communicate with UEs via one or more cells. For example, base station 120 may be configured to serve one or more UEs at cell 130. Base station 122 may be configured to serve UEs at cell 132. Base station 124 may be configured to serve UEs at cell 134. A cell may be configured to serve UEs at a certain geographical area at a certain radio frequency, or a range of radio frequencies around a centre frequency of the cell..

Communication network 100 may be operated based on a protocol stack comprising a plurality of protocol layers. The protocol stack may be arranged based on the open systems interconnection (OSI) model or a layer model of a particular standard. In one example, the protocol stack may comprise a service data adaptation protocol (SDAP) layer, which may receive data from an application layer for transmission. The SDAP layer may be configured to exchange data with the packet data convergence (PDCP) layer. The PDCP layer may be responsible of generation of data bursts comprising one or more data packets, for example based on data obtained from the SDAP layer.

The PDCP layer may provide data to one or more instances of the radio link control (RLC) layer. For example, PDCP data may be transmitted on one or more RLC transmission legs. Each RLC instance may be associated with corresponding MAC instances of the MAC layer. The MAC layer may provide a mapping between logical channels of upper layer(s) and transport channels of the physical layer, handle multiplexing and demultiplexing of MAC service data units (SDU). Furthermore, the MAC layer may provide error correction functionality based on packet retransmissions, for example according to the hybrid automatic repeat request (HARQ) process. Physically separate transmission legs may be provided by the physical (PHY) layer, also known as Layer 1 (L1). Corresponding protocol stacks may be applied both at base stations 120, 122, 124 and UE 110.

In a split base station architecture, part of the protocol layers may be implemented at a central unit (CU) of a base station, e.g., a gNB-CU, which may be configured to handle upper layers of the protocol stack, for example SDAP and PDCP layers. Furthermore, gNB-CU may be configured to handle radio resource control (RRC) operations. A central unit of a base station may be associated with, e.g., configured to control, one or more distributed units (DU) of the base station, e.g., gNB-DU, which may be configured to handle lower layers of the protocol stack, for example RLC, MAC, and L1. Radio unit(s) of the gNB-DU(s) may be configured to transmit/receive data to/from UE(s) over the radio interface. Error correction encoding and/or decoding may be performed at the physical layer, for example by UE 110 or a base station, e.g., a distributed unit thereof.

Communication network 100 may comprise other network function(s), network device(s), or protocol(s), in addition, or alternative to, those illustrated in FIG. 1. A network device may be configured to implement functionality of one or more network functions. Even though some embodiments have been described in the context of 5G, it is appreciated that embodiments of the present disclosure are not limited to this example network. Example embodiments may be therefore applied in any present or future communication networks. An apparatus, such as for example UE 110 or base station 120, may comprise, or be configured to implement, e.g. by means of software, one or more of the protocol layers described herein. It is however noted that example embodiments may be applied in any context, where data is transmitted or received.

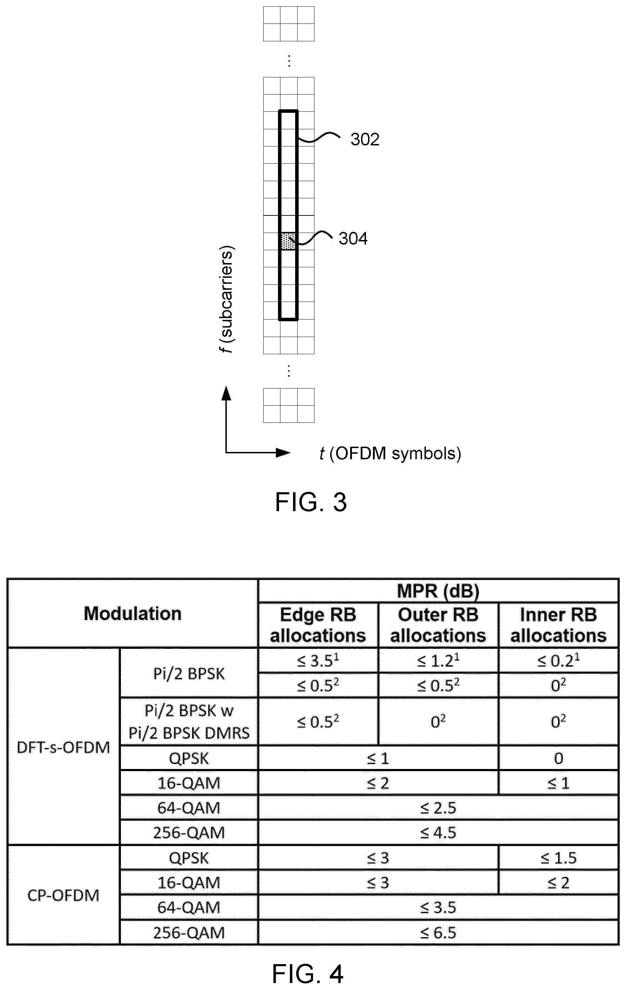

Different methods may be used for optimizing bandwidth usage in radio communications. For example, the frequency spectrum may be divided into bandwidth parts (BWP). A BWP may comprise set of continuous resource blocks with given numerology on network carrier(s). Resource blocks (RB) may comprise physical resource blocks (PRB), which may be defined on the physical layer. An example of an RB is provided in FIG. 3. A maximum BWP size may be configured, for example 275 RBs. In this case, a single BWP could be processed by one 4k FFT (fast Fourier transform) operation. However, the BWP concept covers mainly, or only, baseband operation. In this case, the RF (radio frequency) configuration of a UE may be regarded as an implementation issue and be defined based on RF requirements for the relatively static channel bandwidth (CBW) of the UE. BWPs may be used for example for supporting different UE capabilities (e.g., reduced capability, RedCap, devices), improved UE power saving, supporting multiple parallel radio resource control (RRC) configurations (e.g., different numerologies), or the like.

Such baseband-centric definition of BWPs may not be however optimal. For example, determining RF requirements of UE 110 based on UE CBW may provide benefits only in terms of power savings in baseband processing, but not in terms of RF power consumption. Configurations of BWPs may be also very complicated due to many BWP types, BWP switching, BWP fallback, associated UE capabilities, and the like. For example, BWP switching may cause confusion and error cases, which may result in interoperability issues. Furthermore, there may be confusion associated with definitions of the BWP(s) and the CBW. This may cause difficulties in defining how to switch BWPs and thereby also unnecessary interruptions in user plane (UP) communications.

Example embodiments of the present disclosure provide an improved bandwidth adaptation scheme, for example for application in 6G time-division duplex (TDD) scenarios. The example embodiments enable both baseband and RF aspects to be considered jointly, which provides opportunities for reducing power consumption at UEs. Furthermore, in some example embodiments the downlink and uplink may be considered jointly. Therefore, a switching gap between uplink and downlink transmissions due to the possible RF configuration change may be avoided or it may be made shorter. Furthermore, the example embodiments enable the available UE transmit power to be unlocked as it is no longer restricted by unnecessarily configured maximum power reduction values.

FIG. 2 illustrates an example of an apparatus configured to practice one or more example embodiments. Apparatus 200 may be for example UE 110, or a base station 120, 122, 124, or a split portion thereof (e.g., a central or distributed unit of a base station), a network device, a terminal device, or in general any apparatus configured to implement functionality described herein. Apparatus 200 may comprise at least one processor 202. The at least one processor 202 may comprise, for example, one or more of various processing devices, such as for example a co-processor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like.

Apparatus 200 may further comprise at least one memory 204. The memory 204 may be configured to store, for example, computer program code 206 or the like, for example operating system software and application software. Memory 204 may comprise one or more volatile memory devices, one or more non-volatile memory devices, and/or a combination thereof. For example, the memory may be embodied as magnetic storage devices (such as hard disk drives, magnetic tapes, etc.), optical magnetic storage devices, or semiconductor memories (such as mask ROM, PROM (programmable ROM), EPROM (erasable PROM), flash ROM, RAM (random access memory), etc.). Memory 204 is provided as an example of a (non-transitory) computer readable medium. The term "non-transitory," as used herein, is a limitation of the medium itself (i.e., tangible, not a signal) as opposed to a limitation on data storage persistency (e.g., RAM vs. ROM).

Apparatus 200 may further comprise a communication interface 208 configured to enable apparatus 200 to transmit and/or receive information. Communication interface 208 may comprise an external communication interface, such as for example a radio interface between UE 110 and base station(s) 120, 122, 124, or a communication interface between a central unit and distributed unit(s) of a base station (e.g., an F1-U and/or F1-C interface). Communication interface 208 may comprise one or more radio transmitters or receivers, which may be coupled to one or more antennas or apparatus 200, or be configured to be coupled to one or more antennas external to apparatus 200. Communication interface may, alternatively or additionally, comprise an internal communication interface of apparatus 200 configured, for example, for accessing the at least one memory 204 or an external memory configured to be communicatively or physically coupled to apparatus 200 in order to read or write codewords.

Apparatus 200 may further comprise other components and/or functions such as user interface 210 comprising at least one input device and/or at least one output device. The input device may take various forms such a keyboard, a touch screen, or one or more embedded control buttons. The output device may for example comprise a display, a speaker, or the like.

When apparatus 200 is configured to implement some functionality, some component and/or components of apparatus 200, such as for example the at least one processor 202 and/or the at least one memory 204, may be configured to implement this functionality. Furthermore, when the at least one processor 202 is configured to implement some functionality, this functionality may be implemented using program code 206 comprised, for example, in the at least one memory 204.

The functionality described herein may be performed, at least in part, by one or more computer program product components such as software components. According to an example embodiment, apparatus 200 comprises a processor or processor circuitry, such as for example a microcontroller, configured by the program code 206, when executed, to execute the embodiments of the operations and functionality described herein. Program code 206 is provided as an example of instructions which, when executed by the at least one processor 202, cause performance of apparatus 200.

Alternatively, or in addition, the functionality described herein can be performed, at least in part, by one or more hardware logic components. For example, and without limitation, illustrative types of hardware logic components that can be used include field-programmable gate arrays (FPGAs), application-specific integrated circuits (ASICs), application-specific standard products (ASSPs), system-on-a-chip systems (SOCs), complex programmable logic devices (CPLDs), graphics processing units (GPUs), or the like.

Apparatus 200 may be configured to perform, or cause performance of, method(s) described herein or comprise means for performing method(s) described herein. In one example, the means comprises the at least one processor 202, the at least one memory 204 including instructions (e.g., program code 206) configured to, when executed by the at least one processor 202, cause apparatus 200 to perform the method(s). In general, computer program instructions may be executed on means providing generic processing functions. Such means may be embedded for example in a UE (e.g., a personal computer, smart phone, or an internet-of-things device), a network device, or the like. The method(s) may be thus computer-implemented, for example based algorithm(s) executable by the generic processing functions, an example of which is the at least one processor 202. The means may comprise transmission or reception means, for example one or more radio transmitters or receivers, which may be coupled or be configured to be coupled to one or more antennas. Apparatus 200 may comprise, for example, a network device, for example, a base station, an access point, a base station, or a central/distributed unit thereof. Although apparatus 200 is illustrated as a single device, it is appreciated that, wherever applicable, functions of apparatus 200 may be distributed to a plurality of devices.

FIG. 3 illustrates an example of a physical resource block comprising resource elements, according to an example embodiment. A signal, e.g., an uplink signal or downlink signal, may comprise a plurality of orthogonal frequency division multiplexing (OFDM) symbols, for example cyclic prefix OFDM (CP-OFDM) symbols or discrete Fourier transform spread OFDM (DFT-s-OFDM) symbols. An OFDM symbol may comprise a plurality of subcarriers. Each subcarrier may be modulated by a scheme, such as for example quadrature amplitude modulation (QAM) or phase shift keying (PSK). A signal may comprise a plurality of resource blocks (RB) 302 e.g., PRBs. A RE 304 (dotted) may comprise one subcarrier at one OFDM symbol. A RE 304 may therefore carry one modulated symbol. An RB 302 may comprise a set of REs 304 associated with one or more OFDM symbols. In the example of FIG. 3, resource block 302 comprises twelve subcarriers (REs) in one OFDM symbol. In general, a resource block may comprise a set of time-frequency transmission resources configured to carry data over a transmission medium, such as for example a wireless radio interface.

Modulated symbols may be selected based on mapping binary input strings to particular modulation symbols of a constellation, for example a QAM or PSK constellation. In general, a constellation may comprise a set of possible complex-valued modulation symbols. A modulation symbol may be therefore represented by two real numbers, I- and Q-components, corresponding to the real and imaginary parts of the complex-valued modulation symbol, respectively. However, in case of binary phase shift keying (BPSK), a modulation symbol may be purely real-valued or purely imaginary-valued. In this case, a modulation symbol may be represented by one real number. In case of OFDM, the signal may be constructed in frequency domain based on assigning constellation symbols to different REs 304 and transforming the resulting OFDM symbols to time domain, for example by the inverse fast Fourier transform (IFFT) operation. The resulting time domain signal comprises complex-valued samples, which may be also referred to as IQ samples.

FIG. 4 illustrates an example of maximum power reduction values configured for different types of modulations and resource block allocations. In order to facilitate reasonable UE implementation while fulfilling the requirements related to transmitted signal quality (including level of spurious emissions), UE 110 may be allowed to reduce its maximum output power, for example depending on characteristics of the transmitted waveform, e.g., modulation order, as well as the RB allocation or power class of UE 110. RB allocation may be also referred to as resource allocation. Modulation order may refer to the number of bits carried by a signal modulation symbol (constellation point). The amount of maximum output power reduction may be defined by preconfigured (e.g., standardized) maximum power reduction (MPR) values with respect to maximum transmitted power of the power class (such as 23 dBm in the case of power class 3), or with respect to some other predefined value (e.g. 23 dBm + impact of predefined power boost value (dB)). It is noted that different MPR values may be defined separately for edge, outer, and inner RB allocations on the configured CBW.

For example, if the CBW comprises $N_{RB}$ resource blocks, the edge, outer, and inner RB allocations may be determined, e.g., by UE 110, as follows:

- $N_{RB}$ may denote the maximum number of RBs for a given CBW and sub-carrier spacing;

- $$RB_{Start,Low} = \max\left(1, \text{floor}\left(\frac{L_{CRB}}{2}\right)\right)$$ , where max() indicates the largest value of all arguments and floor($x$) is the greatest integer less than or equal to $x$ and $L_{CRB}$ is the transmission bandwidth (e.g., the length of a contiguous resource block allocation expressed in units of resources blocks); and

-

$$RB_{Start,High} = N_{RB} - RB_{Start,Low} - L_{CRB}.$$

An RB allocation may be determined to be an inner RB allocation, if , for example if the following conditions are met:

$$RB_{Start,Low} \leq RB_{Start} \leq RB_{Start,High} \text{ and } L_{CRB} \leq \text{ceil}\left(\frac{L_{CRB}}{2}\right),$$

where ceil($x$) is the smallest integer greater than or equal to $x$. Hence, an RB allocation may be determined to be an inner RB allocation, if the location of the RB allocation (e.g., as defined by start index $RB_{Start}$ of the RB allocation) is in the middle section of the channel bandwidth (e.g., between lower and upper limits $RB_{Start,Low}$ and $RB_{Start,High}$) and the size of the RB allocation is below or equal to a threshold margin ($L_{CRB}$). In general, an RB allocation may be determined to be an inner RB allocation, if the RB allocation is not located within a predefined margin from the edges of the channel bandwidth. An RB allocation may be determined to be an edge RB allocation, if the RBs are allocated at the lowermost or uppermost edge of the channel, e.g., with $L_{CRB} \leq 2$ (RBs). An RB allocation may be determined to be an outer RB allocation, if the RBs is not an inner RB allocation or an edge RB allocation.

Additional MPR (A-MPR) requirements may be configured to meet specific additional emission requirements. A-MPR may be used for example to protect other radio systems. These requirements may be for example related to regulatory requirements. When deriving A-MPR requirements for UE 110, it may be assumed that the DC location is in the middle of CBW (network carrier). This may negatively impact uplink coverage. When A-MPR is defined, UE 110 may be allowed to apply the highest value of the normal MPR and A-MPR values, e.g., max(MPR, A-MPR).

In general, UE 110 may be configured to set its configured maximum output power $P_{CMAX,f,c}$ for carrier $f$ of serving cell c in a time slot within specified high and low limits $P_{CMAX\_L,f,c}$ and $P_{MAX\_H,f,c}$, that is

$$P_{CMAX\_L,f,c} \leq P_{CMAX,f,c} \leq P_{CMAXH,f,c}.$$

The low limit may be defined as

$$P_{CMAXL,f,c} = \min\{P_{EMAX,c} - \Delta T_{C,c}(P_{PowerClass} - \Delta P_{PowerClass}) - \max(\max(MPR_c$$
$$+ \Delta MPR_c - A\text{-}MPR_c) + \Delta T_{IB,c} + \Delta T_{C,c} + \Delta T_{RxSRS}, P\text{-}MPR_c,$$

where $P_{EMAX,c}$ is the maximum allowed UE output power signalled by higher layers for serving cell c, $\Delta T_{C,c}$ is the allowed operating band edge transmission power relaxation, $P_{PowerClass}$ is the nominal UE power (i.e., no tolerance), $\Delta P_{PowerClass}$ is the adjustment to maximum output power for a given power class, $MPR_c$ is the maximum power reduction, $\Delta MPR_c$ is the extra allowance to the maximum power reduction due to large width of operating band, $A\text{-}MPR_c$ is th additional-maximum power reduction, $\Delta T_{1B,c}$ is the allowed maximum configured output power relaxation due to support for inter-band CA (carrier aggregation) operation, inter-band NR-DC (NR dual connectivity) operation and due to support for SUL (supplementary uplink) operations, for serving cell c, $\Delta T_{RxSRS}$ is the allowed maximum configured output power relaxation due to support for sounding reference signal (SRS) antenna port switching, $P\text{-}MPR_c$ is the power management maximum power reduction for serving cell c.

The low limit may be impacted by MPR or A-MPR values, allowing UE 110 to reduce its maximum output power to meet other RF transmission requirements (e.g., in band emission (IBE) requirements, or out of band emission (OOBE) requirements). As mentioned above, the MPR values may depend on the waveform, modulation, as well as the type (edge, inner, outer) of the RB allocation within the CBW. In general, smaller MPR may be allowed for inner RB allocations.

Examples of MPR values for different modulations and RB allocation types are provided in the table of FIG. 4. For example, if the RB allocation is an inner RB allocation and the modulation scheme is DFT-s-OFDM with 16-QAM, the maximum power reduction value is "≤ 1", meaning that UE 110 is allowed to reduce its maximum output power by 1 dB. As another example, if the modulation scheme is CP-OFDM with 64-QAM, the maximum power reduction value is "≤ 3.5" (regardless of the type of RB allocation), meaning that UE 110 is allowed to reduce its maximum output power by 3.5 dB. The values with subscripts 1 and 2 may be applicable depending on, for example, the operating frequency band or capabilities of UE 110 (e.g., power boosting configuration). Example embodiments of the present disclosure enable the available UE transmit power to be unlocked (e.g., taking into account the used bandwidth for both MPR and A-MPR).

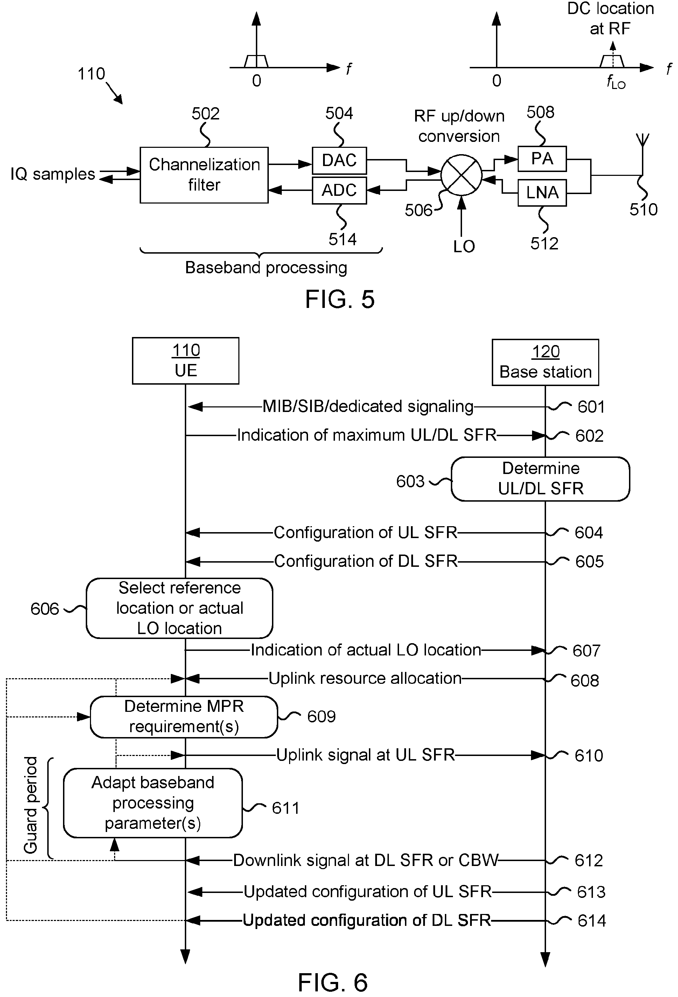

FIG. 5 illustrates an example of a conceptual architecture of a transceiver, in this example UE 110. The time domain IQ samples resulting from applying a modulation scheme, such as CP-OFDM or DFT-S-OFDM with a particular constellation, to binary input data, may be fed to a channelization filter 502 of UE 110. Channelization filter 502 may comprise a digital filter, such as for example a finite impulse response (FIR) filter or an infinite impulse response (IIR) filter. Channelization filter 502 may be configured to filter the IQ samples at the baseband, for example to reduce the power of the signal outside the allocated transmission bandwidth, e.g., to obtain a steeper slope at the edge of the signal in frequency domain than provided by the IFFT modulation scheme (e.g., OFDM) and/or other used filters.

UE 110 may comprise a digital-to-analog converter (DAC) 504, which may be implemented either as a single component with analog-to-digital converter (ADC) 514, or as a separate component. DAC 504 may be configured for transmission of the uplink signal, e.g., to convert the digital IQ samples, optionally filtered by channelization filter 502, to an analog baseband signal. Channelization filter 502, DAC 504, and ADC 514 may be configured for baseband processing of uplink/downlink signals.

UE 110 may comprise a mixer 506, which may be configured to upconvert the analog baseband signal to a radio frequency. As illustrated above the signal chain, the baseband signal may be centred around the zero frequency, the direct current (DC) component of the baseband signal corresponding to the zero frequency. RF upconversion by mixer 506 with a local oscillator (LO) frequency $f_{LO}$ may translate the DC component to the LO frequency. In the RF signal, the DC component of the baseband signal may be therefore located at the LO frequency. The LO frequency, also referred to as LO location (in frequency domain), may therefore be the location of the DC component in the RF signal.

Power amplifier (PA) 508 may be configured to amplify the transmitted signal before it is fed to antenna 510. Due to non-idealities of PA 508, UE 110 may be allowed to reduce its maximum output power to avoid in band or out of band interference, for example by means of configuration of MPR values.

Upon reception of an RF signal, a low-noise amplifier (LNA) 512 may be configured to amplify the received RF signal. The RF signal may be down converted by mixer 506 to obtain an analog baseband signal. ADC 514 may sample the analog baseband signal to obtain digital IQ samples, which may be optionally filtered by channelization filter 502. ADC 514 may be therefore configured for reception of the downlink signal, e.g., to convert the analog baseband signal from mixer 506 to a digital baseband signal (IQ samples).

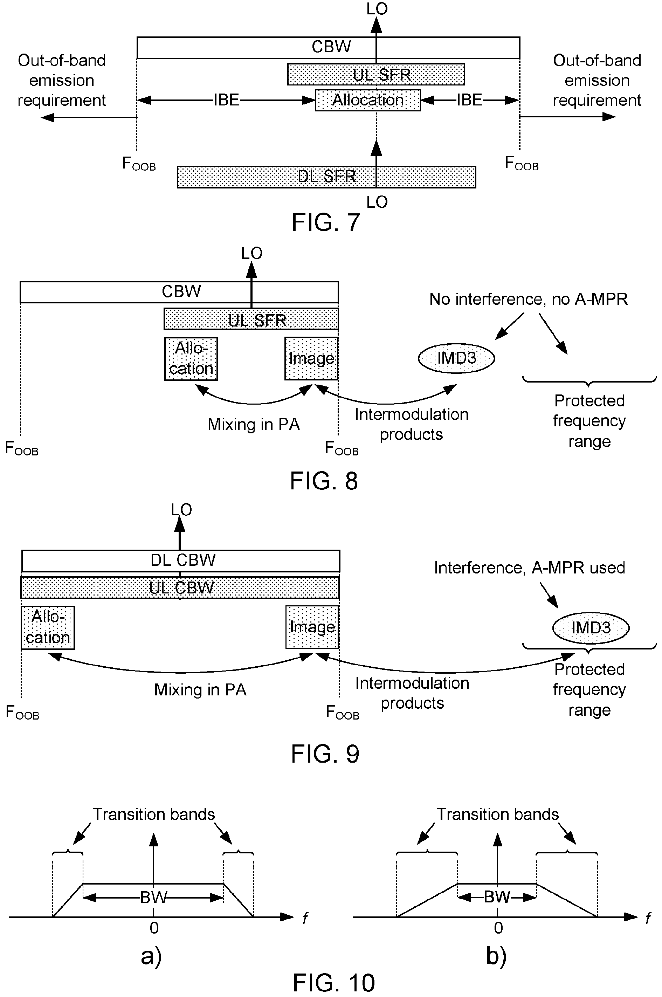

Note that FIG.5 illustrates a conceptual architecture of a transceiver for illustrating examples of relative locations of various components. It is understood that different variations of such a signal processing chain may be implemented. For example, the signal processing chain might comprise separate transmit (TX) and receive (RX) branches, which could be configured to operate based on the same LO frequency. Furthermore, channelization filter 502 might be embodied as separate instances for transmission and reception of the uplink and downlink signals, respectively. For example, channelization filter, or the different instances thereof, might be configured with different values of filter coefficients and/or different number of filter coefficients, as will be further described with reference to FIG. 10.

FIG. 6 illustrates an example of signalling and operations for configuring an uplink/downlink scheduling frequency range. Operations of FIG. 6 may be used for example in case of TDD operation, for example to configure UE 110 with BWP-like scheduling frequency range(s) with added RF or radio resource management (RRM) functionalities. Example embodiments of FIG. 6 enable to define a reference location or reference range for the UE bandwidth. Bandwidth expansion or contraction operations may be defined relative to the reference location/range such the UE bandwidth expands or contracts around the reference location/range. This provides the benefit of enabling RF requirements to be defined relative to the reference location/range.

At operation 601, UE 110 may be configured to receive an indication of a channel bandwidth (CBW) of UE 110. The indication of the CBW may comprise an indication of the uplink CBW or the downlink CBW, or both. The uplink CBW may or may not be equal to the downlink CBW. For example, the uplink CBW may be confined within the downlink CBW, e.g., be a subset of the uplink CBW. UE 110 may be configured to determine IBE and/or OOBE requirement(s) based on the (uplink) channel bandwidth of UE 110.

Base station 120 may be configured to transmit an indication of the CBW to UE 110, for example via broadcast signaling, such as a master information block (MIB) or a system information block (SIB), or via dedicated signalling targeted to UE 110. Broadcast signalling may be transmitted on a control channel, such as for example a physical broadcast channel (PBCH). UE 110 may receive the indication of the CBW via respective channel/signalling.

At operation 602, UE 110 may transmit, to base station 120, an indication of the maximum scheduling frequency range(s) of UE 110. A scheduling frequency range (SFR) may comprise a range of frequencies configured for scheduling data transmissions for UE. The maximum SFR may indicate the maximum range of frequencies, on which UE 110 is able to transmit uplink or receive downlink signals without retuning its RF circuitry. A maximum uplink (UL) SFR of UE 110 may be narrower than the (UL) CBW. The maximum downlink (DL) SFR of UE 110 may be narrower than the (DL) CBW.

The UL SFR may be a range of frequencies configured for scheduling transmissions of uplink signals. For example, base station 120 may be configure to schedule uplink transmissions for UE 110 within the UL SFR, but not to schedule uplink transmissions for UE 110 outside the UL SFR, i.e., on frequencies of PRSs not belonging to the UL SFR. The UL SFR may define, in terms of frequency, the possible locations for uplink resource allocation for UE 110, for example for transmission by UE 110 on the PUSCH channel. The UL SFR may be confined within the (UL) CBW, e.g., be a subset of the (UL) CBW. For example, PRBs of the UL SFR may be a subset of the PRBs of the (UL) CBW. The UL SFR may comprise a contiguous set of PRBs.

A downlink SFR may be a range of frequencies for scheduling transmission of downlink signals to UE. For example, base station 120 may be configure to schedule downlink transmissions to UE 110 within the DL SFR, but not to schedule downlink transmissions to UE 110 outside the DL SFR. The DL SFR may define, in terms of frequency, the possible locations for downlink resource allocation for UE 110, for example for transmission by base station 120 on the PDSCH channel. The DF SFR may be confined within the CBW, e.g., be a subset of the (DL) CBW. For example, PRBs of the DL SFR may be a subset of the PRBs of the (DL) CBW. Alternatively, the number of PRBs of the DL SFR may be the same as the number of PRBs of the CBW. For example, the DL SFR may comprise same PRBs as the (DL) CBW (e.g., the PRBs of the DL SFR and (DL) CBW being identical). In general, base station 120 may be configured to allocate time-frequency transmission resources, e.g., PRBs, within the uplink and/or downlink SFRs for UE 110. The DL SFR may comprise a contiguous set of PRBs.

At operation 603, base station 120 may determine the UL SFR and/or the downlink SFR for UE 110, for example such that such that the UL SFR is within the maximum UL SFR of UE 110, and/or that the DL SFR is within the maximum DL SFR of UE 110.

The UL and/or DL SFRs may be configured with particular options in terms of predefined granularity (e.g., 5 MHz, 10 MHz, 20 MHz, or the like), for example with a number of PRBs for given subcarrier spacing (such as 25 PRBs for 5MHz and 15 kHz subcarrier spacing). Alternatively, or additionally, the UL and/or DL SFR(s) may be configured with particular location options within the CBW. For example, the starting PRB of the UL/DL SFR may be selected from predefined values. These values (e.g., allowed sizes and/or locations) may be preconfigured at UE 110 and/or base station 120, for example based on standardized values. The UL SFR and/or the DL SFR may be therefore configured based on a number of SFR sizes and locations within the CBW (e.g., in terms of PRBs), where the sizes/locations are subsets of all possible sizes and locations within the CBW. Base station 120 may be for example configured to select the PRBs of the UL SFR and/or DL SFR from configured subsets of PRBs of the CBW. Configuring such limitations provides the benefit of reducing complexity of testing.

At operation 604, base station 120 may transmit the configuration of the UL SFR to UE 110. UE 110 may receive the configuration of the UL SFR from base station 120. The UL SFR may be associated with a reference location or reference range in the frequency domain. For example, the UL SFR may be defined relative to the reference location. The reference location may be within the UL SFR. The reference location may comprise at least one of the following: a reference location of a DC component in the frequency domain (cf. FIG. 5 "DC location at RF"), a reference location of a DC subcarrier in the frequency domain, a centre frequency of the UL SFR, a reference LO frequency, or a reference centre frequency of UE 110 uplink and/or downlink communication. The reference range may comprise a range of values for any type of a reference location, for example those mentioned above. The reference location may comprise a reference frequency. The reference range may comprise a reference frequency range.

In other words, UE 110 may be configured with a predefined UL SFR, which may define the DC location (e.g., center frequency or other reference location) for UL and/or DL operation. The UL SFR may be located within the UL and/or DL CBW. The configuration of the UL SFR may comprise an indication of the reference location/range. UE 110 may therefore receive an indication of the reference location/range in the configuration of the UL SFR. Alternatively, the indication may be transmitted/received separately from the configuration of the UL SFR.

The reference location or the reference range may be substantially in the middle of the uplink scheduling frequency range, for example comprise the centre frequency of the UL SFR. This provides the benefit of minimizing the MPR need or A-MPR need as unwanted emission created by modulator nonidealities in power amplifier do not reach too far in out-of-band region or do not reach the out-of-band region at all. UE 110 may be however allowed for certain implementation flexibility to select the actual location, for example within a predefined margin, for example a margin of $\pm N$ PRBs, where $N$ is a positive integer (e.g., $N=1$). The margin may be determined by base station 120 and signalled to UE 110.

Another option is that specification allows this without additional signalling. UE 110 may be configured to receive and indication of the margin from base station.

At operation 605, base station 120 may transmit the configuration of the DL SFR to UE 110. UE 110 may receive the configuration of the DL SFR from base station 120. It is however noted that base station 120 may be configured to transmit the configuration of the UL SFR (cf., operation 604), but not to determine (cf., operation 603) or transmit (cf., operation 605) the configuration of the DL SFR to UE 110. In this case, UE 110 may consider the (DL) CBW as the range for which downlink transmissions may be scheduled by base station 120. The DL SFR may confined within the UL SFR, e.g., be a subset of the UL SFR For example, PRBs of the UL SFR may be a subset of the PRBs of the DL SFR. UE 110 may be therefore also configured a DL SFR defining the possible locations in terms of frequency for transmitting downlink signals to UE 110, e.g., possible locations for PDSCH resource allocation in frequency.

At operation 606, UE 110 may select the reference location or an actual LO location. UE 110 may be for configured to select the reference location to be the location of the DC component in the frequency domain, the location of the DC subcarrier in the frequency domain, the centre frequency of the UL SFR, the reference LO frequency, or the centre frequency of UE 110 uplink and/or downlink communication. UE 110 may use the reference location for determining MPR requirements at operation 609. The reference location may therefore comprise a reference location (e.g., LO location) configured for determining the MPR requirements by UE 110. UE 110 may be configured to select the reference location from a predefined frequency range, e.g., the reference range or the UL SFR.

In general, UE 110 may be configured to determine the reference location based on the UL SFR range. As noted above, the reference location may be defined (e.g., based on a standard) relative to the UL SFR, for example to be in the middle of the UL SFR. UE 110 may therefore determine the reference location based on the UL SFR, for example by setting the reference location in the middle of the UL SFR (e.g., at the centre subcarrier or PRB of the UL SFR).

Alternatively, or additionally, UE 110 may be configured to select an actual LO location (e.g., actual DC location) for performing frequency upconversion and/or down conversion. UE 110 may be configured to use the actual LO location for determining the MPR requirements. The actual LO location may comprise an actual LO frequency configured at UE 110. The actual LO location may be or correspond to the reference location. Alternatively, UE 110 may be configured to select the actual LO location from a predefined frequency range around the reference location (e.g., the margin of one or more PRBs). For example, in case the reference location (e.g., DC location ) is in the middle of the UL SFR, UE 110 may be configured to select the actual location within a predefined frequency range corresponding to an allowed margin (e.g. $\pm$ 1 PRB), thereby allowing some implementation flexibility.

At operation 607, UE 110 may transmit an indication of the actual LO location to base station 120, for example via higher layer signaling such as a MAC control element (CE)or RRC message.

At operation 608, base station 120 may transmit a resource allocation (e.g., an uplink grant) to UE 110. The resource allocation may be configured for UE 110 for transmitting uplink signal(s) on the UL SFR, for example on the PUSCH. The resource allocation may be confined within the UL SFR, e.g., comprise a subset of PRBs of the UL SFR. UE 110 may receive the resource allocation from base station 120. As noted above, the resource allocation may be of a particular type, e.g., an edge, inner, or outer RB allocation, which may affect determination of the MPR value at UE 110. An UL grant addressing resources outside the UL SFR may be considered as an invalid resource allocation. The same holds for a DL grant addressing resources outside the DL SFR. UE 110 may be configured to ignore such UL/DL grants. For example, UE 110 may be configured to refrain from transmitting uplink signal(s) on the resources allocated outside the UL SFR.

An example of a configuration of UL/DL SFRs with the reference location (e.g., LO location) in the middle of the UL SFR is illustrated in FIG. 7. The channel bandwidth (CBW) may determine the border frequencies ($F_{OOB}$) for OOBE and IBE requirements. As noted above, the CBW may be the UL CBW (UE CBW) or the DL CBW (BS CBW). In this example, the UL CBW is equal to the DL CBW, and hence the common label of 'CBW' is used. The uplink resource allocation ("Allocation") may be within the UL SFR. IBE requirements may be defined for frequencies (such as PRBs) that belong to the CBW but are outside the resource allocation. If a DL SFR is configured, UE 110 may use the same (actual) LO location for transmission of uplink signals within the UL SFR and reception of downlink signals within the DL SFR, as will be further described with reference to operations 610 to 612.

Referring back to FIG. 6, at operation 609 UE 110 may determine MPR requirement(s). UE 110 may be configured to determine the MPR requirement(s) based on the UL SFR. For example, if the UL SFR does not include PRBs corresponding to outer or edge RB allocations, UE 110 may determine the MPR value based on the waveform, or the type and/or order of modulation, considering any allocation within the UL SFR to be an inner RB allocation (cf., rightmost column in FIG. 4). If the UL SFR includes different types of RB allocations (e.g., inner and outer RB allocations), UE 110 may determine the MPR value based on the type and order of modulation, considering also the location of the resource allocation within the UL SFR. Determination of the MPR requirement(s) may be therefore further based on the resource allocation, e.g., the location of the resource allocation within the UL SFR, for example with respect to the CBW. The location of the resource allocation may comprise the location (e.g., indices) of the PRBs of the resource allocation.

Note that the MPR requirements may comprise (normal) MPR values or A-MPR values, or both. FIG. 8 illustrates an example of configuration of UL SFR such that transmission on the resource allocation does not cause interference to a protected frequency band. By proper configuration of the UL SFR, the need for applying A-MPR for protecting the protected frequency range may be avoided. This may be achieved for example if the UL SFR is narrower than the CBW. In the example of FIG. 8, the resource allocation is at the lower end of the UL SFR. Due to mixing in power amplifier 508, an image of the uplink signal transmitted by UE 110 at the resource allocation appears at the upper end of the UL SFR. Furthermore, third order intermodulation distortion (IMD3) appears as OOBE below the protected frequency range.

UE 110 may be configured to determine the MPR requirement(s) further based on the reference location or the actual LO location. This enables UE 110 to determine whether A-MPR is to be configured for protecting particular OOB frequencies. In the example of FIG. 8, UE 110 may determine that no A-MPR is needed (cf., A-MPR value is equal to 0 dB), because the UL SFR and LO locations are such that IMD3 does not land on the protected frequency range. UE 110 may be preconfigured with one or more protected frequency ranges. If UE 110 determines that IMD3, or any other OOBE component, lands on a protected frequency range, UE 110 may determine a non-zero A-MPR value. Configuration of the UL SFR with a frequency range (span) narrower than the CBW enables to minimize the MPR requirements, because UE 110 does not need to prepare for transmitting uplink signals outside the UL SFR.

An example of transmission on allocated frequency resources causing interference to a protected frequency range is in FIG. 9. In this case, no UL SFR is configured and therefore UE 110 needs to prepare for uplink transmissions at any location over the UL CBW, with the LO location in the middle of the UL CBW and in this example also the DL CBW. A resource allocation at the lower end of the UL CBW therefore causes an image at the upper end of the UL CBW, but also the IMD3 to land on the protected frequency range, thereby requiring UE 110 to determine a non-zero A-MPR value.

At operation 610, UE 110 may transmit an uplink signal to base station 120, for example on the PUSCH. UE 110 may be configured to transmit the uplink signal at the UL SFR, e.g., according to the resource allocation received at operation 608. The bandwidth of the uplink signal may be equal to the maximum bandwidth of the uplink signal. UE 110 may be configured to transmit the uplink signal in compliance with the MPR requirement(s) determined at operation 609. For example, UE 110 may be configured to reduce its maximum output power in accordance with the determined MPR or A-MPR value. The uplink signal may have certain bandwidth corresponding to the frequency range of the resource allocation. Before transmission, UE 110 may be configured to process the uplink signal at the baseband by DAC 504 and optionally with channelization filter 502.

At operation 611, UE 110 may be configured to adapt the baseband processing parameter(s). UE 110 may be configured to determine parameter(s) of channelization filter 502 and/or DAC 504 based on the UL/DL SFR (e.g., the bandwidth of the UL/DL SFR), for example in order to prepare for reception of a downlink signal after transmission of an uplink signal by UE 110, or vice versa. Complexity and power consumption of baseband processing may depend on the number of antenna ports, e.g., the number of individual digital streams of the IQ samples to be processed. For example, at frequencies of 6-15 GHz, the number of RX antenna ports may be up to eight and the number of TX antenna ports may be up to four, respectively. Power consumption of transmission circuitry of UE 110, not considering power amplifier 508, may be mainly caused by DAC 504. The power consumption of DAC 504 may be linearly proportional to the bandwidth and exponentially proportional to the number of DAC bits, for example by $P = B2^{2R}$, where $B$ is bandwidth and R is the number of bits per sample. To optimize power consumption, B may be adapted according to the configuration of the UL SFR.

In the receiver chain, ADC 514 may cause high power consumption and the power consumption may increase with higher sampling rate (wider bandwidth) and higher accuracy (bits per sample). UE 110 may be configured to leverage the power saving opportunities provided by the downlink/uplink scheduling rate adaptation. UE 110 may be for example configured to switch between transmission of the uplink signal (e.g., operation 610) and reception of the downlink signal (e.g., operation 612) and to adapt baseband processing parameters in between. As noted above, the uplink transmission may be within the UL SFR and the downlink reception may be from the DL SFR or the CBW. The bandwidth of the uplink signal may be narrower than the bandwidth of the downlink signal.

Switching between transmission of the uplink signal and reception of the downlink signal may comprise adaptation of parameter(s) of baseband processing of the uplink signal or downlink signal. The adaptation of the parameter(s) may be based on the bandwidth of the uplink signal and/or the bandwidth of the downlink signal. This provides the benefit of enabling optimization of baseband processing for the relevant bandwidth.

For example, UE 110 may be configured to adapt the digital-to-analog or analog-to-digital conversion sampling rate. The adaptation may be made during a guard period, which may correspond to the gap between transmission and reception when the scheduling range changes (e.g., between UL SFR and DL SFR or UL SFR and CBW). The sampling rate may indicate the rate, at which DAC 504 is configured to take the baseband IQ samples in, or the rate at which ADC is configured to sample the analog baseband signal.

For example, UE 110 may be configured to reduce the sampling rate when switching from reception of the downlink signal to transmission of the uplink signal. On the other hand, UE 110 may be configured to increase the sampling rate when switching from transmission of the uplink signal to reception of the downlink signal (cf., the dashed route from operation 612 back to operation 610). The sampling rate of DAC 504 may be therefore lower than the sampling rate of ADC 514. This provides the benefit of reducing power consumption, because the narrower UL SFR can be handled with lower sampling rate.

Switching between transmission of the uplink signal and reception of the downlink signal may be without changing the (actual) LO location (e.g., LO frequency) of UE 110, which may be configured to be used for RF upconversion or down conversion (e.g., by mixer 506). UE 110 may be therefore configured to transmit the uplink signal within the UL SFR and receive the downlink signal within the CBW or DL SFR with same local oscillator frequency. This provides the benefit of enabling the switching to be made without a need for extending the guard period. In other words, adaptation between UL SFR and DL SFR having different configurations can be done during the existing gaps reserved for link direction switching.

As another example of adapting baseband processing parameter(s), UE 110 may be configured to adapt parameter(s) of channelization filter 502. As described above, channelization filter may define properties of the transmitted or received signal. An ideal channelization filter may be dimensioned according to CBW of UE 110, for example having a flat frequency response in the pass band (UE CBW) while being configured to completely remove frequencies outside the pass band. However, such an ideal filter cannot be realized in practice, since it would require infinite filter length, i.e., an infinite number of filter coefficients. And the more ideal filter the higher the complexity. Non-flat frequency response in the pass band may deteriorate the quality (e.g., the magnitude of the error vector) of the transmitted or received signal. Furthermore, non-ideal attenuation outside the pass band increases the level out-of-band emissions.

Channelization filter 502 may be implemented by any suitable filtering technique, e.g., as time domain implementation with the weighted overlap-and-add (WOLA) approach. Regardless of how the filter is implemented, parameter selection may be used to trade complexity and power consumption with performance. For example, the number of taps (filter coefficients) of time domain realization may affect both complexity and performance. For example, increasing the length of the filter (i.e., more taps) may increase the performance but this comes at the cost of increased complexity and power consumption. UE 110 may be therefore configured to leverage filter adaptation opportunities provided by downlink/uplink scheduling range adaptation. For example, when the scheduling frequency range is narrow and/or in the middle of the CBW, UE 110 may be configured to use a less aggressive filter (e.g., less flat filter at the edges of the CBW) having low complexity. When the scheduling frequency range is wide and/or next to CBW edge, UE 110 may be configured to apply a filter with a flatter frequency response but higher complexity.

UE 110 may be therefore configured to, alternatively or additionally to the adaptation of the sampling rate, adapt parameter(s) of channelization filter 502, for example such that the adaptation is configured to change the width of the transition band of channelization filter 502. The adaptation may be again made during the guard period.

Examples of two filter configurations are illustrated in FIG. 10. In this example, the transition bands of filter (a) are narrower than the transition bands of filter (b). Furthermore, filter (a) might have a wider bandwidth than filter (b), as also illustrated in FIG. 10. Implementing filter (a) may require a higher number of filter coefficients to realize the narrower transition band. Filter (a) may be configured for reception of the downlink signal(s), e.g., for filtering the digital baseband signal coming from ADC 514. Filter (b) may be configured for transmission of the uplink downlink signal(s), e.g., for filtering time domain IQ samples coming from a modulator of UE 110. The transition band may be therefore wider for processing uplink signal(s) than for processing downlink signal(s). This provides the benefit of reducing computational complexity, and thereby power consumption, during transmission at the narrower UL SFR. Adaptation of the parameter(s), e.g., number of filter coefficients, and/or their values, may be implemented in practise by using different instances of channelization filter 502 for processing uplink and downlink signals.

At operation 612, UE 110 may receive a downlink signal. UE 110 may be configured to iterate operations 610 to 612 such that the baseband processing parameter(s) are adapted between transmission of the uplink signal and reception of the downlink signal, e.g., after transmission of an uplink signal and before reception of the next downlink signal, or, after reception of a downlink signal and before transmission of the next the uplink signal Bandwidths of the uplink and downlink signals may be different. Therefore, the transmission bandwidth of UE 110 may be different from the reception bandwidth of UE 110. The transmission and reception bandwidths may be for example defined by respective band pass filters of UE 110. Optionally, when iterating transmission and reception of uplink/downlink signals, UE 110 may receive another uplink resource allocation (cf., operation 608) and update the MPR requirement(s) based on the updated resource allocation (cf., operation 609). After reception of the downlink signal, UE 110 may move to operation 608, 609, or 611.

At operation 613, base station 612 may transmit an update of the configuration of the UL SFR. UE 110 may be configured to receive the updated configuration of the UL SFR. The update of the UL SFR may be associated with a change of the reference location and/or the actual LO location. For example, UE 110 may be configured to update the reference location or the actual LO location based on the updated UL SFR, for example based on the frequency range of the updated UL SFR as described with reference to operation 606. The update of the UL SFR may be further associated with a change of the guard period, or introduction of the guard period if a guard period had not yet been configured. For example, base station 120 may be configured to schedule uplink transmissions for UE 110 within the updated UL SFR such that a gap, or dedicated (e.g., extended) gap for adapting the baseband parameter(s), is provided between uplink transmission on the updated UL SFR and downlink transmission on the DL SFR or the (DL) CWB.

At operation 614, base station 612 may transmit an update of the configuration of the DL SFR. The update of the DL SFR may be transmitted, if a DL SFR had been previously configured.

After receiving the update(s) of the UL SFR and/or DL SFR at operation(s) 613, 614, UE 110 may move back to operation 609 to determine updated MPR requirement(s) based on the updated configuration of the UL SFR. Alternatively, UE 110 may receive an update of the resource allocation at operation 608 and take that into account when determining the updated MPR requirement(s) at operation 609.

Various modifications of the procedure of FIG. 6 may be applied. For example, UE 110 might be configured to receive one or more of the signals/messages of operations 601, 604, 608, 612, 613, or 614 from base station 120 directly, or via another device, such as for example another UE via side link communication. Furthermore, the signaling between UE 110 and the network (cf., operations 601, 602, 604, 605, 607, 608, 610, 612, 613, 614) may not occur between UE 110 and a single base station, but rather a group of base stations configured to cooperate for serving UE 110. Base station 120 may therefore comprise a group of base stations. Whenever base station 120 is configured to transmit a signal/message, UE 110 may be configured to receive the signal/message, or vice versa.

Some operations may be optional and the order performing the operations may be also altered, where appropriate. For example, the order of operations 601 and 602 may be switched, or these operations may be omitted. The order of operations 604 and 605 may be switched, or operation 605 may be omitted. One or more of operations 607, 611, 612, 613, and 614 may be also omitted.

Example embodiments of the present disclosure enable to optimize UE operation in presence of restrictions on maximum output power and relaxations to such restrictions, e.g., by means of MPR or A-MPR values. One or more of the following functionalities may be provided:

UE 110 may be configured to receive, from base station 120, a configuration comprising an UL SFR relative to a reference location/range in the frequency domain. The reference location/range may be located within the UL SFR. The UL SFR may be located within at least one of the following: uplink channel bandwidth (UL CBW) or CBW. A maximum power reduction (or MPR requirements) and an additional maximum power reduction (or A-MPR requirements) may be determined based on the UL SFR.

In band emission requirements and out of band emission requirements may be based on the UL CBW or the CBW. The reference location may be at least one of the following: a DC location or, a DC subcarrier or, a center frequency for both uplink operation and downlink operation or, the middle of the UL SFR or, substantially the middle of the UL SFR and the UE 110 selects the reference location from a predefined frequency range or, signalled by UE 110 in response to the reception of the configuration or, a local oscillator frequency (e.g., in the middle of the UL SFR) or, located within the UL SFR or, selected by base station 120 from a predefined frequency range and signalled by base station 12 in the configuration or, determined based on the UL SFR. The UL SFR may comprise a number of contiguous resource blocks. The number of contiguous resource blocks may be a subset of resource blocks comprised in the UL CBW.

The configuration may additionally comprise a DL SFR. The DL SFR may comprise a number of contiguous resource blocks. The number resource blocks may be the same as the resource blocks comprised in the CBW or the DL CBW, or the number resource blocks may be a subset of the resource blocks comprised in the CBW or the DL CBW

The UL SFR and the DL SFR may have a number of sizes and a number of locations within the CBW, which are subsets of a number of all theoretically possible sizes and a number of all theoretically possible locations within the CBW. If the size/location of UL/DL scheduling is changed and the reference location is unchanged, then the guard period between DL reception and UL transmission at UE 110 might not be changed. If the size/location of UL scheduling is changed and the reference location is changed, then the guard period between DL reception and UL transmission at UE 110 may be increased during the change (e.g., during the transient period of this reconfiguration).

UL-to-DL and DL-to-UL switching may be configured to trigger RF bandwidth change at UE 110 (e.g., UL SFR being narrower than the DL SFR) Possible frequency domain locations of a PUSCH allocation may be located within the UL SFR. If the UL SFR is defined, then UL transmission(s) may be located within in the UL SFR. Otherwise, the UL transmission(s) may be located within the UL CBW. Possible frequency domain locations of a PDSCH allocation may be within the DL SFR. If the DL SFR is defined, then DL reception may be located within the DL SFR. Otherwise, the DL reception may be located in the DL CBW. UE 110 may indicate, to base station 120, a maximum scheduling range. Base station 120 may indicate to UE 110, the UL CBW, or the UL CBW may derived by UE 110. The DL CBW may be determined by UE 110 to be the same as the UL CBW.

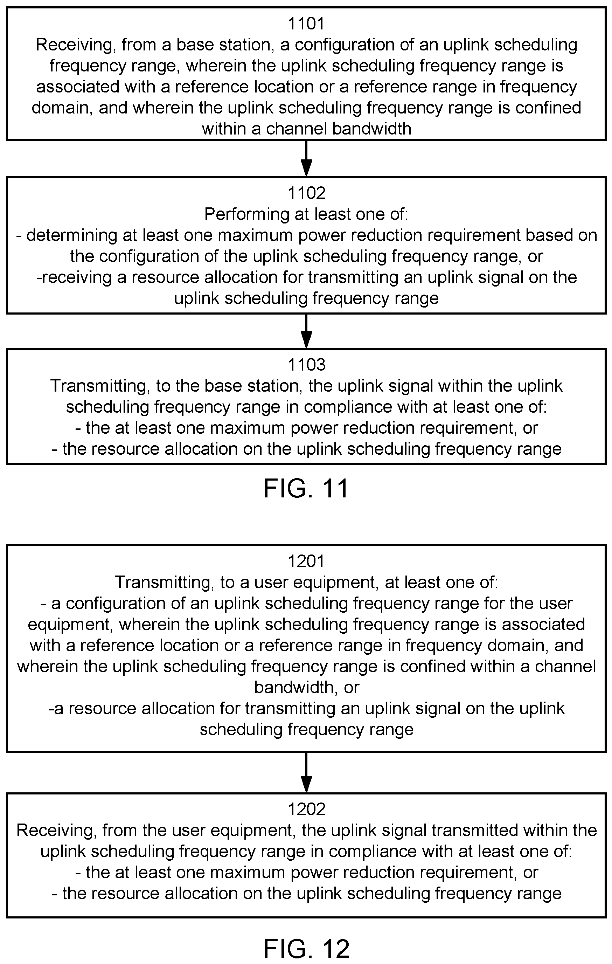

FIG. 11 illustrates an example of a method for configuration of an uplink scheduling frequency range. The method may be performed by UE 110, or in general a transmitter or transceiver, or by a control apparatus configured to control the functioning thereof, when installed therein.

At operation 1101, the method may comprise receiving, from a base station, a configuration of an uplink scheduling frequency range, wherein the uplink scheduling frequency range is associated with a reference location or a reference range in frequency domain, and wherein the uplink scheduling frequency range is confined within a channel bandwidth.

At operation 1102, the method may comprise performing at least one of: determining at least one maximum power reduction requirement based on the configuration of the uplink scheduling frequency range, or receiving a resource allocation for transmitting an uplink signal on the uplink scheduling frequency range.

At operation 1103, the method may comprise Transmitting, to the base station, the uplink signal within the uplink scheduling frequency range in compliance with at least one of: the at least one maximum power reduction requirement, or the resource allocation on the uplink scheduling frequency range.

FIG. 12 illustrates an example of a method for configuration of an uplink scheduling frequency range. The method may be performed by base station 120, or in general a receiver or a transceiver, or by a control apparatus configured to control the functioning thereof, when installed therein.

At operation 1201, the method may comprise transmitting, to a user equipment, at least one of: a configuration of an uplink scheduling frequency range for the user equipment, wherein the uplink scheduling frequency range is associated with a reference location or a reference range in frequency domain, and wherein the uplink scheduling frequency range is confined within a channel bandwidth, or a resource allocation for transmitting an uplink signal on the uplink scheduling frequency range.

At operation 1202, the method may comprise receiving, from the user equipment, the uplink signal transmitted within the uplink scheduling frequency range in compliance with at least one of: the at least one maximum power reduction requirement, or the resource allocation on the uplink scheduling frequency range.

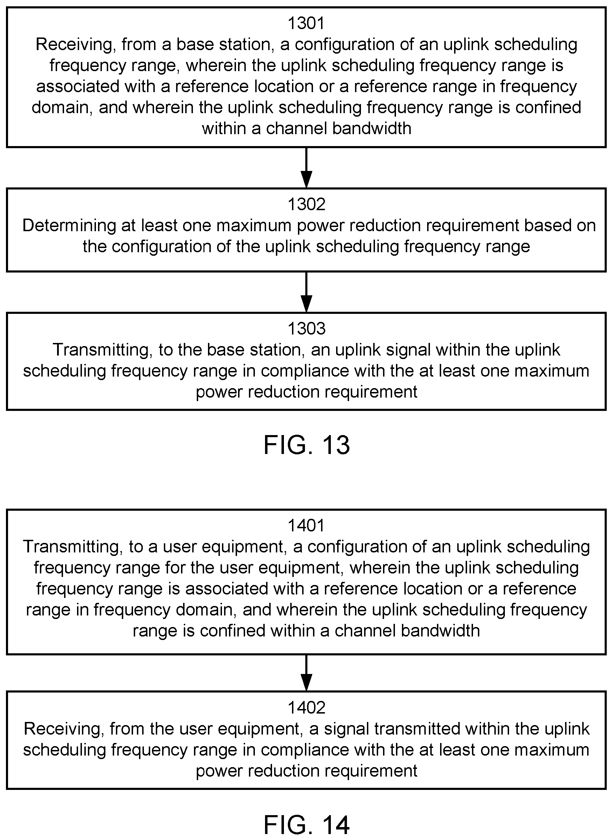

FIG. 13 illustrates an example of a method for configuration of an uplink scheduling frequency range. The method may be performed by UE 110, or in general a transmitter or transceiver, or by a control apparatus configured to control the functioning thereof, when installed therein.

At operation 1301, the method may comprise receiving, from a base station, a configuration of an uplink scheduling frequency range, wherein the uplink scheduling frequency range is associated with a reference location or a reference range in frequency domain, and wherein the uplink scheduling frequency range is confined within a channel bandwidth.

At operation 1302, the method may comprise determining at least one maximum power reduction requirement based on the configuration of the uplink scheduling frequency range.

At operation 1303, the method may comprise transmitting, to the base station, an uplink signal within the uplink scheduling frequency range in compliance with the at least one maximum power reduction requirement.

FIG. 14 illustrates an example of a method for configuration of an uplink scheduling frequency range. The method may be performed by base station 120, or in general a receiver or a transceiver, or by a control apparatus configured to control the functioning thereof, when installed therein.

At operation 1401, the method may comprise transmitting, to a user equipment, a configuration of an uplink scheduling frequency range for the user equipment, wherein the uplink scheduling frequency range is associated with a reference location or a reference range in frequency domain, and wherein the uplink scheduling frequency range is confined within a channel bandwidth.

At operation 1402, the method may comprise receiving, from the user equipment, a signal transmitted within the uplink scheduling frequency range in compliance with the at least one maximum power reduction requirement.

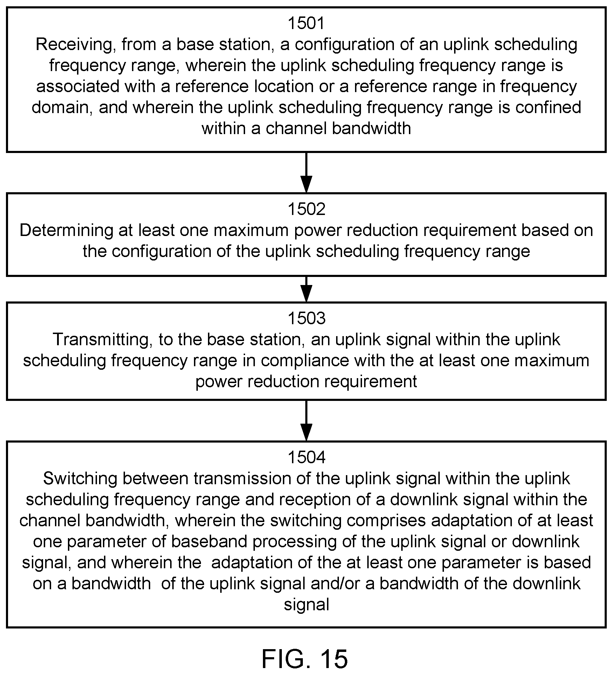

FIG. 15 illustrates an example of a method for baseband parameter adaptation associated with transmission on an uplink scheduling frequency range. The method may be performed by UE 110, or in general a transmitter or transceiver, or by a control apparatus configured to control the functioning thereof, when installed therein.

At operation 1501, the method may comprise receiving, from a base station, a configuration of an uplink scheduling frequency range, wherein the uplink scheduling frequency range is associated with a reference location or a reference range in frequency domain, and wherein the uplink scheduling frequency range is confined within a channel bandwidth.

At operation 1502, the method may comprise: determining at least one maximum power reduction requirement based on the configuration of the uplink scheduling frequency range.

At operation 1503, the method may comprise transmitting, to the base station, an uplink signal within the uplink scheduling frequency range in compliance with the at least one maximum power reduction requirement.

At operation 1504, the method may comprise switching between transmission of the uplink signal within the uplink scheduling frequency range and reception of a downlink signal within the channel bandwidth, wherein the switching comprises adaptation of at least one parameter of baseband processing of the uplink signal or downlink signal, and wherein the adaptation of the at least one parameter is based on a bandwidth of the uplink signal and/or a bandwidth of the downlink signal.

Further features of the methods directly result for example from functionality of UE 110 or base station 120, as described throughout the description, claims, and drawings, and are therefore not repeated here. An apparatus, for example UE 110 or base station 120, may be configured to perform or cause performance of any aspect of the method(s) described herein. Further, a computer program or a computer program product may comprise instructions for causing, when executed by an apparatus, the apparatus to perform any aspect of the method(s) described herein. Further, an apparatus may comprise means for performing any aspect of the method(s) described herein. According to an example embodiment, the means comprises at least one processor; and at least one memory storing instructions that, when executed by the at least one processor, cause the apparatus at least to perform any aspect of the method(s).

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps or operations of the methods described herein may be carried out in any suitable order, or simultaneously where appropriate.

Additionally, individual blocks may be deleted from any of the methods without departing from the scope of the subject matter described herein. Aspects of any of the example embodiments described above may be combined with aspects of any of the other example embodiments described to form further example embodiments without losing the effect sought.

The term 'comprising' is used herein to mean including the method, blocks, or elements identified, but that such blocks or elements do not comprise an exclusive list and a method or apparatus may contain additional blocks or elements.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements. Expression "or" may be understood as a non-exclusive "or" and therefore a list or two or more elements indicated to be mutually optional by the expression "or" means at least any one of the elements, or at least any two or more of the elements, or at least all the elements.

Although subjects may be referred to as 'first' or 'second' subjects, this does not necessarily indicate any order or importance of the subjects. Instead, such attributes may be used solely for the purpose of making a difference between subjects.

As used in this application, the term 'circuitry' may refer to one or more or all of the following: (a) hardware-only circuit implementations (such as implementations in only analog and/or digital circuitry) and (b) combinations of hardware circuits and software, such as (as applicable):(i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims.

As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of this specification.

The present subject matter may be described by the following clauses.

Claus 1. A user equipment, comprising: means for receiving, from a base station, a configuration of an uplink scheduling frequency range, wherein the uplink scheduling frequency range is associated with a reference location or a reference range in frequency domain, and wherein the uplink scheduling frequency range is confined within a channel bandwidth; means for determining at least one maximum power reduction requirement based on the configuration of the uplink scheduling frequency range; means for transmitting, to the base station, an uplink signal within the uplink scheduling frequency range in compliance with the at least one maximum power reduction requirement; and means for switching between transmission of the uplink signal within the uplink scheduling frequency range and reception of a downlink signal within the channel bandwidth, wherein the switching comprises adaptation of at least one parameter of baseband processing of the uplink signal or downlink signal, and wherein the adaptation of the at least one parameter is based on a bandwidth of the uplink signal and/or a bandwidth of the downlink signal.

Clause 2. The user equipment according to clause 1, wherein the bandwidth of the uplink signal comprises a maximum bandwidth of the uplink signal.

Clause 3. The user equipment according to clause 1 or 2, further comprising: means for receiving a resource allocation for transmitting the uplink signal on the uplink scheduling frequency range; and means for determining the at least one maximum power reduction requirement further based on the resource allocation.

Clause 4. The user equipment according to any of clauses 1 to 3, wherein the user equipment is configured to transmit the uplink signal within the uplink scheduling frequency range and receive the downlink signal within the channel bandwidth with same local oscillator frequency.

Clause 5. The user equipment according to any of clauses 1 to 4, wherein the at least one parameter of the baseband processing of the uplink signal or the downlink signal comprises sampling rate of a digital-to-analog converter or an analog-to-digital converter.

Clause 6. The user equipment according to clause 5, wherein the digital-to-analog converter is configured for the transmission of the uplink signal, wherein the analog-to-digital converter is configured for the reception of the downlink signal, wherein the bandwidth of the uplink signal is narrower than the bandwidth of the downlink signal, and wherein the sampling rate of the digital-to-analog converter is lower than the sampling rate of the analog-to-digital converter.

Clause 7. The user equipment according to any of clauses 1 to 6, wherein the at least one parameter of the baseband processing of the uplink signal or the downlink signal comprises at least one parameter of a channelization filter of the user equipment, and wherein the adaptation of the at least one parameter of the channelization filter is configured to change width of a transition band of the channelization filter.

Clause 8. The user equipment according to clause 7, wherein the channelization filter comprises a digital filter, and wherein the transition band of the channelization filter is wider for processing the uplink signal than for processing the downlink signal.

Clause 9. The user equipment according to clause 7 or 8, wherein the bandwidth of the uplink signal is narrower than the bandwidth of the downlink signal, and wherein the transition band of the channelization filter is wider for processing the uplink signal than for processing the downlink signal.

Clause 10. The user equipment according to any of clauses 1 to 9, further comprising: means for receiving, from the base station, a master information block or a system information block comprising an indication of the channel bandwidth of the user equipment.

Clause 11. The user equipment according to any of clauses 1 to 10, further comprising: means for determining at least one in band emission requirement or at least one out of band emission requirement based on the channel bandwidth of the user equipment.

Clause 12. The user equipment according to any of clauses 1 to 11, wherein the reference location or the reference range is substantially in the middle of the uplink scheduling frequency range or located within the uplink scheduling frequency range.

Clause 13. The user equipment according to any of clauses 1 to 12, wherein the configuration of the uplink scheduling frequency range comprises an indication of the reference location or the reference range.

Clause 14. The user equipment according to any of clauses 1 to 13, wherein the reference location comprises at least one of the following: a reference location of a direct current component in the frequency domain, a reference location of a direct current subcarrier in the frequency domain, a centre frequency of the uplink scheduling frequency range, a reference local oscillator frequency, or a reference centre frequency of the user equipment for uplink and downlink communication.

Clause 15. The user equipment according to any of clauses 1 to 14, further comprising: means for selecting an actual local oscillator location in the frequency domain for frequency upconversion of the uplink signal and frequency down conversion of the downlink signal.

Clause 16. The user equipment according to clause 15, wherein the actual local oscillator location is the reference location, or wherein the actual local oscillator location is selected from a predefined range around the reference location.

Clause 17. The user equipment according to any of clauses 12 to 16, further comprising: means for receiving, from the base station, a configuration of a downlink scheduling frequency range, wherein the uplink scheduling frequency range is confined within the downlink scheduling frequency range.

Clause 18. The user equipment according to clause 17, further comprising: means for receiving, from the base station, an update of the configuration of the uplink scheduling frequency range or an update of the configuration of the downlink scheduling frequency range, wherein the update of the configuration of the uplink scheduling frequency range or the update of the configuration of the downlink scheduling frequency range is not associated with any of a change of the reference location, a change of a duration of a guard period between the transmission of the uplink signal and the reception of the downlink signal, or introduction of the guard period.

Clause 19. The user equipment according to clause 17, further comprising: means for receiving, from the base station, an update of the configuration of the uplink scheduling frequency range or an update of the configuration of the downlink scheduling frequency range, wherein the update of the configuration of the uplink scheduling frequency range or the update of the configuration of the downlink scheduling frequency range is associated with a change of the reference location and one of an increase of a duration of a guard period between the transmission of the uplink signal and the reception of the downlink signal or introduction of the guard period.

Clause 20. The user equipment according to any of clauses 1 to 19, wherein the uplink scheduling frequency range or the downlink scheduling frequency range comprises a contiguous range of physical resource blocks.

Clause 21. The user equipment according to clause 20, wherein physical resource blocks of the uplink scheduling frequency range are a subset of physical resource blocks of the channel bandwidth, wherein physical resource blocks of the downlink scheduling frequency range are a subset of physical resource blocks of the channel bandwidth, wherein the physical resource blocks of downlink scheduling range are identical to the physical resource blocks of the channel bandwidth, or wherein physical resource blocks of the uplink scheduling frequency range or the physical resource blocks of the downlink scheduling frequency range have been selected from configured subsets of physical resource blocks of the channel bandwidth.

Clause 22. The user equipment according to any of clauses 1 to 21 further comprising: means for determining the at least one maximum power reduction requirement further based on the reference location or the actual local oscillator location.

Clause 23. The user equipment according to any of clauses 1 to 22, wherein the at least one maximum power reduction requirement comprises a maximum power reduction, MPR, value or an additional maximum power reduction, A-MPR, value.

Clause 24. A method comprising: receiving, from a base station, a configuration of an uplink scheduling frequency range, wherein the uplink scheduling frequency range is associated with a reference location or a reference range in frequency domain, and wherein the uplink scheduling frequency range is confined within a channel bandwidth; determining at least one maximum power reduction requirement based on the configuration of the uplink scheduling frequency range; transmitting, to the base station, an uplink signal within the uplink scheduling frequency range in compliance with the at least one maximum power reduction requirement; and switching between transmission of the uplink signal within the uplink scheduling frequency range and reception of a downlink signal within the channel bandwidth, wherein the switching comprises adaptation of at least one parameter of baseband processing of the uplink signal or downlink signal, and wherein the adaptation of the at least one parameter is based on a bandwidth of the uplink signal and/or a bandwidth of the downlink signal.

Clause 25. A computer program comprising instructions, which, when executed by a user equipment, cause the user equipment at least to: receive, from a base station, a configuration of an uplink scheduling frequency range, wherein the uplink scheduling frequency range is associated with a reference location or a reference range in frequency domain, and wherein the uplink scheduling frequency range is confined within a channel bandwidth; determine at least one maximum power reduction requirement based on the configuration of the uplink scheduling frequency range; transmit, to the base station, an uplink signal within the uplink scheduling frequency range in compliance with the at least one maximum power reduction requirement; and switch between transmission of the uplink signal within the uplink scheduling frequency range and reception of a downlink signal within the channel bandwidth, wherein the switching comprises adaptation of at least one parameter of baseband processing of the uplink signal or downlink signal, and wherein the adaptation of the at least one parameter is based on a bandwidth of the uplink signal and/or a bandwidth of the downlink signal.

**Claims**

1. A user equipment, comprising:

   means for receiving, from a base station, a configuration of an uplink scheduling frequency range, wherein the uplink scheduling frequency range is associated with a reference location or a reference range in frequency domain, and wherein the uplink scheduling frequency range is confined within a channel bandwidth;
   means for determining at least one maximum power reduction requirement based on the configuration of the uplink scheduling frequency range;
   means for transmitting, to the base station, an uplink signal within the uplink scheduling frequency range in compliance with the at least one maximum power reduction requirement; and
   means for switching between transmission of the uplink signal within the uplink scheduling frequency range and reception of a downlink signal within the channel bandwidth, wherein the switching comprises adaptation of at least one parameter of baseband processing of the uplink signal or downlink signal, and wherein the adaptation of the at least one parameter is based on a bandwidth of the uplink signal and/or a bandwidth of the downlink signal.

2. The user equipment according to claim 1, wherein the bandwidth of the uplink signal comprises a maximum bandwidth of the uplink signal.

3. The user equipment according to claim 1 or 2, further comprising:

   means for receiving a resource allocation for transmitting the uplink signal on the uplink scheduling frequency range; and
   means for determining the at least one maximum power reduction requirement further based on the resource allocation.

4. The user equipment according to any of claims 1 to 3, wherein the user equipment is configured to transmit the uplink signal within the uplink scheduling frequency range and receive the downlink signal within the channel bandwidth with same local oscillator frequency.

5. The user equipment according to any of claims 1 to 4, wherein the at least one parameter of the baseband processing of the uplink signal or the downlink signal comprises sampling rate of a digital-to-analog converter or an analog-to-digital converter,
   and optionally:
   wherein the digital-to-analog converter is configured for the transmission of the uplink signal, wherein the analog-to-digital converter is configured for the reception of the downlink signal, wherein the bandwidth of the uplink signal is narrower than the bandwidth of the downlink signal, and wherein the sampling rate of the digital-to-analog converter is lower than the sampling rate of the analog-to-digital converter.

6. The user equipment according to any of claims 1 to 5, wherein the at least one parameter of the baseband processing of the uplink signal or the downlink signal comprises at least one parameter of a channelization filter of the user equipment, and wherein the adaptation of the at least one parameter of the channelization filter is configured to change width of a transition band of the channelization filter.

7. The user equipment according to claim 6, wherein the channelization filter comprises a digital filter, and wherein the transition band of the channelization filter is wider for processing the uplink signal than for processing the downlink signal.

8. The user equipment according to claim 6 or 7, wherein the bandwidth of the uplink signal is narrower than the bandwidth of the downlink signal, and wherein the transition band of the channelization filter is wider for processing the uplink signal than for processing the downlink signal.

9. The user equipment according to any of claims 1 to 8, further comprising:
   means for receiving, from the base station, a master information block or a system information block comprising an indication of the channel bandwidth of the user equipment.

10. The user equipment according to any of claims 1 to 9, further comprising:
    means for determining at least one in band emission requirement or at least one out of band emission requirement based on the channel bandwidth of the user equipment.

11. The user equipment according to any of claims 1 to 10, wherein the reference location or the reference range is substantially in the middle of the uplink scheduling frequency range or located within the uplink scheduling frequency range.

12. The user equipment according to claim 11, further comprising:

    means for receiving, from the base station, a configuration of a downlink scheduling frequency range, wherein the uplink scheduling frequency range is confined within the downlink scheduling frequency range,
    and optionally further comprising: means for receiving, from the base station, an update of the configuration of the uplink scheduling frequency range or an update of the configuration of the downlink scheduling frequency range, wherein the update of the configuration of the uplink scheduling frequency range or the update of the configuration of the downlink scheduling frequency range is not associated with any of a change of the reference location, a change of a duration of a guard period between the transmission of the uplink signal and the reception of the downlink signal, or introduction of the guard period.

13. The user equipment according to any of claims 1 to 12, wherein the uplink scheduling frequency range or the downlink scheduling frequency range comprises a contiguous range of physical resource blocks;
and optionally:

wherein physical resource blocks of the uplink scheduling frequency range are a subset of physical resource blocks of the channel bandwidth,
wherein physical resource blocks of the downlink scheduling frequency range are a subset of physical resource blocks of the channel bandwidth,
wherein the physical resource blocks of downlink scheduling range are identical to the physical resource blocks of the channel bandwidth, or
wherein physical resource blocks of the uplink scheduling frequency range or the physical resource blocks of the downlink scheduling frequency range have been selected from configured subsets of physical resource blocks of the channel bandwidth.

14. A method comprising:

receiving, from a base station, a configuration of an uplink scheduling frequency range, wherein the uplink scheduling frequency range is associated with a reference location or a reference range in frequency domain, and wherein the uplink scheduling frequency range is confined within a channel bandwidth;
determining at least one maximum power reduction requirement based on the configuration of the uplink scheduling frequency range;
transmitting, to the base station, an uplink signal within the uplink scheduling frequency range in compliance with the at least one maximum power reduction requirement; and
switching between transmission of the uplink signal within the uplink scheduling frequency range and reception of a downlink signal within the channel bandwidth, wherein the switching comprises adaptation of at least one parameter of baseband processing of the uplink signal or downlink signal, and wherein the adaptation of the at least one parameter is based on a bandwidth of the uplink signal and/or a bandwidth of the downlink signal.

15. A computer program comprising instructions, which, when executed by a user equipment, cause the user equipment at least to:

receive, from a base station, a configuration of an uplink scheduling frequency range, wherein the uplink scheduling frequency range is associated with a reference location or a reference range in frequency domain, and wherein the uplink scheduling frequency range is confined within a channel bandwidth;
determine at least one maximum power reduction requirement based on the configuration of the uplink scheduling frequency range;
transmit, to the base station, an uplink signal within the uplink scheduling frequency range in compliance with the at least one maximum power reduction requirement; and
switch between transmission of the uplink signal within the uplink scheduling frequency range and reception of a downlink signal within the channel bandwidth, wherein the switching comprises adaptation of at least one parameter of baseband processing of the uplink signal or downlink signal, and wherein the adaptation of the at least one parameter is based on a bandwidth of the uplink signal and/or a bandwidth of the downlink signal.

FIG. 1

FIG. 2

$f$ (subcarriers)

302

304

$t$ (OFDM symbols)

FIG. 3

| Modulation | | MPR (dB) | | |
| --- | --- | --- | --- | --- |
| | | Edge RB allocations | Outer RB allocations | Inner RB allocations |
| DFT-s-OFDM | Pi/2 BPSK | ≤ 3.5[1] | ≤ 1.2[1] | ≤ 0.2[1] |
| | | ≤ 0.5[2] | ≤ 0.5[2] | 0[2] |
| | Pi/2 BPSK w Pi/2 BPSK DMRS | ≤ 0.5[2] | 0[2] | 0[2] |
| | QPSK | ≤ 1 | | 0 |
| | 16-QAM | ≤ 2 | | ≤ 1 |
| | 64-QAM | ≤ 2.5 | | |
| | 256-QAM | ≤ 4.5 | | |
| CP-OFDM | QPSK | ≤ 3 | | ≤ 1.5 |
| | 16-QAM | ≤ 3 | | ≤ 2 |
| | 64-QAM | ≤ 3.5 | | |
| | 256-QAM | ≤ 6.5 | | |

FIG. 4

FIG. 5

FIG. 6

LO

CBW

UL SFR

Out-of-band
emission
requirement

IBE ← Allocation → IBE

Out-of-band
emission
requirement

$F_{OOB}$

DL SFR

$F_{OOB}$

LO

FIG. 7

LO

CBW

UL SFR

Allo-
cation

Image

No interference, no A-MPR

IMD3

Mixing in PA

Intermodulation
products

Protected
frequency
range

$F_{OOB}$

$F_{OOB}$

FIG. 8

LO

DL CBW

UL CBW

Allo-
cation

Image

Interference, A-MPR used

IMD3

Mixing in PA

Intermodulation
products

Protected
frequency
range

$F_{OOB}$

$F_{OOB}$

FIG. 9

Transition bands

BW

0

$f$

a)

Transition bands

BW

0

$f$

b)

FIG. 10

**1101**
Receiving, from a base station, a configuration of an uplink scheduling frequency range, wherein the uplink scheduling frequency range is associated with a reference location or a reference range in frequency domain, and wherein the uplink scheduling frequency range is confined within a channel bandwidth

**1102**
Performing at least one of:
- determining at least one maximum power reduction requirement based on the configuration of the uplink scheduling frequency range, or
-receiving a resource allocation for transmitting an uplink signal on the uplink scheduling frequency range

**1103**
Transmitting, to the base station, the uplink signal within the uplink scheduling frequency range in compliance with at least one of:
- the at least one maximum power reduction requirement, or
- the resource allocation on the uplink scheduling frequency range

FIG. 11

**1201**
Transmitting, to a user equipment, at least one of:
- a configuration of an uplink scheduling frequency range for the user equipment, wherein the uplink scheduling frequency range is associated with a reference location or a reference range in frequency domain, and wherein the uplink scheduling frequency range is confined within a channel bandwidth, or
-a resource allocation for transmitting an uplink signal on the uplink scheduling frequency range

**1202**
Receiving, from the user equipment, the uplink signal transmitted within the uplink scheduling frequency range in compliance with at least one of:
- the at least one maximum power reduction requirement, or
- the resource allocation on the uplink scheduling frequency range

FIG. 12

1301
Receiving, from a base station, a configuration of an uplink scheduling frequency range, wherein the uplink scheduling frequency range is associated with a reference location or a reference range in frequency domain, and wherein the uplink scheduling frequency range is confined within a channel bandwidth

1302
Determining at least one maximum power reduction requirement based on the configuration of the uplink scheduling frequency range

1303
Transmitting, to the base station, an uplink signal within the uplink scheduling frequency range in compliance with the at least one maximum power reduction requirement

FIG. 13

1401
Transmitting, to a user equipment, a configuration of an uplink scheduling frequency range for the user equipment, wherein the uplink scheduling frequency range is associated with a reference location or a reference range in frequency domain, and wherein the uplink scheduling frequency range is confined within a channel bandwidth

1402
Receiving, from the user equipment, a signal transmitted within the uplink scheduling frequency range in compliance with the at least one maximum power reduction requirement

FIG. 14

1501
Receiving, from a base station, a configuration of an uplink scheduling frequency range, wherein the uplink scheduling frequency range is associated with a reference location or a reference range in frequency domain, and wherein the uplink scheduling frequency range is confined within a channel bandwidth

1502
Determining at least one maximum power reduction requirement based on the configuration of the uplink scheduling frequency range

1503
Transmitting, to the base station, an uplink signal within the uplink scheduling frequency range in compliance with the at least one maximum power reduction requirement

1504
Switching between transmission of the uplink signal within the uplink scheduling frequency range and reception of a downlink signal within the channel bandwidth, wherein the switching comprises adaptation of at least one parameter of baseband processing of the uplink signal or downlink signal, and wherein the adaptation of the at least one parameter is based on a bandwidth of the uplink signal and/or a bandwidth of the downlink signal

FIG. 15

**EUROPEAN SEARCH REPORT**

Application Number

EP 25 16 4787

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/248138 A1 (LENOVO SINGAPORE PTE LTD [SG]) 28 December 2023 (2023-12-28) * the whole document * | 1-15 | INV. H04W52/14 H04L5/14 H04W52/36 H04W72/0457 H04W72/23 |
| | | | TECHNICAL FIELDS SEARCHED (IPC) |
| | | | H04W H04L |

The present search report has been drawn up for all claims

| Place of search | Date of completion of the search | Examiner |
|---|---|---|
| The Hague | 14 July 2025 | Tejera, Pedro |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 16 4787

This annex lists the patent family members relating to the patent documents cited in the above-mentioned European search report.
The members are as contained in the European Patent Office EDP file on
The European Patent Office is in no way liable for these particulars which are merely given for the purpose of information.

14-07-2025

| Patent document cited in search report | Publication date | Patent family member(s) | Publication date |
|---|---|---|---|
| WO 2023248138 A1 | 28-12-2023 | NONE | |

EPO FORM P0459

For more details about this annex : see Official Journal of the European Patent Office, No. 12/82